# EUROPEAN PATENT APPLICATION

(11) **EP 4 745 797 A1**
(43) Date of publication of application: **20.05.2026**
(21) Application number: 24878490.2
(22) Date of filing: 31.05.2024
(51) Int. Cl.: G06F 16/332, G06F 16/338, G06N 3/0455

(54) **DIALOGUE INTERACTION METHOD, ELECTRONIC DEVICE AND COMPUTER-READABLE STORAGE MEDIUM**

(30) Priority: 18.10.2023 CN 202311365192
(71) Applicant: Huawei Technologies Co., Ltd., Shenzhen, Guangdong 518129 (CN)
(72) Inventor: WU, Feng, Shenzhen, Guangdong 518129 (CN); LU, Dongcai, Shenzhen, Guangdong 518129 (CN)
(74) Representative: Epping - Hermann - Fischer
(86) International application number: PCT/CN2024/096696
(87) International publication number: WO 2025/081837

(57) **Abstract**

This application relates to the field of human-computer interaction technologies, and provides a dialog interaction method, an electronic device, and a computer-readable storage medium. In this application, a historical dialog record is screened for selecting an associated historical dialog record to perform query rewriting on query information, to reduce impact of a historical dialog record with an unrelated topic on the query information, improve accuracy of the query information, improve accuracy of reply data of the query information, and improve interaction accuracy. In addition, the associated historical dialog record is selected to perform query rewriting on the query information, to support a user in simplifying input of the query information in a multi-round interaction process.

## Description

This application claims priority to Chinese Patent Application No. 202311365192.1, filed with the China National Intellectual Property Administration on October 18, 2023 and entitled "DIALOG INTERACTION METHOD, ELECTRONIC DEVICE, AND COMPUTER-READABLE STORAGE MEDIUM", which is incorporated herein by reference in its entirety.

### TECHNICAL FIELD

This application relates to the field of human-computer interaction technologies, and in particular, to a dialog interaction method, an electronic device, and a computer-readable storage medium.

### BACKGROUND

As artificial intelligence technologies develop, an interaction system has been used in more electronic devices, for example, mobile phones, tablet computers, and intelligent robots. The interaction system provides a user with an interaction manner for performing a dialog via a machine. The dialog between the interaction system and the user may be classified into a single-round dialog and a multi-round dialog. The single-round dialog is usually in a form of one question and one answer. The user raises a question or sends a request, and the system identifies user's intention, and answers the question or performs a specific operation. The multi-round dialog is usually in a form of multiple questions and multiple answers.

### SUMMARY

This application provides a dialog interaction method, an electronic device, and a computer-readable storage medium, to improve accuracy of dialog interaction.

To achieve the foregoing objective, this application uses the following technical solutions.

According to a first aspect, a dialog interaction method is provided and applied to a first device. The method includes: obtaining first query information and a target historical dialog record, where the target historical dialog record is a historical dialog record that is in a multi-round historical dialog record and that is associated with the first query information; performing query rewriting based on the target historical dialog record and the first query information, to obtain second query information; and obtaining reply data of the second query information based on the second query information.

For example, rewriting the first query information may include subject completion and pronoun replacement.

For example, a search engine may be invoked to query information based on the second query information, to obtain queried data, and information organization is performed on the queried data, to obtain the reply data of the second query information.

Information organization on the queried data may include content extraction and integration of extracted content. In this way, the related content is extracted and integrated, so that duplicate content can be deleted, a coherent sentence is ensured, and a user can also obtain an accurate query result.

For example, the reply data of the second query information includes a source address of each content, so that when the user needs to query more detailed information, the user can query a related web page according to the source address.

According to the solution provided in the first aspect, a historical dialog record associated with query information is obtained, and query rewriting is performed based on the associated historical dialog record and the query information, to improve accuracy of the query information, improve accuracy of reply data of the query information, and improve interaction accuracy.

In a possible implementation, the target historical dialog record is a historical dialog record that is in the multi-round historical dialog record and whose similarity to the first query information meets a specified threshold. In this way, the historical dialog record can be screened based on a similarity, to reduce impact of unrelated historical dialog records on a subsequent procedure, and improve accuracy of dialog interaction.

In a possible implementation, after obtaining the reply data of the second query information based on the second query information, the method further includes: sending a first query result to a second device based on the reply data of the second query information; or displaying the first query result on a first result interface, where the first query result includes the reply data of the second query information. In this way, the user can obtain a query result of the first query information, to implement dialog interaction.

In a possible implementation, after sending the first query result to the second device, the method further includes: receiving a query instruction that is from the second device and that is for the first query information, and obtaining reply data of the first query information based on the first query information; and sending a second query result to the second device based on the reply data of the first query information; and after displaying the first query result on the first result interface, the method further includes: obtaining the reply data of the first query information based on the first query information in response to a query operation for the first query information; and displaying the second query result on a second result interface, where the second query result includes the reply data of the first query information.

For example, the first result interface may include a query control for the first query information, and query information only for the first query information is initiated via the query control. In this way, the query control for the first query information is provided for the user while the first query result is displayed, so that more accurate content required by the user can be obtained, and an accurate and efficient interaction experience is provided for the user.

In a possible implementation, before obtaining the first query information and the target historical dialog record, the method further includes: performing query recommendation prediction based on the target historical dialog record in response to a dialog fusion search instruction for the target historical dialog record in the multi-round historical dialog record, to obtain predicted query information, where the target historical dialog record is a historical dialog record selected from the multi-round historical dialog record in response to a dialog select operation of a user; and obtaining the first query information includes: obtaining the first query information obtained based on the predicted query information. In this way, a dialog record select function can be provided for the user, to support the user in randomly selecting a plurality of historical dialog records for fusion search, and implement cross-topic, cross-record, and cross-time dialog interaction of the user, thereby improving flexibility and diversity of dialog interaction.

In a possible implementation, obtaining the first query information obtained based on the predicted query information includes: sending the predicted query information to a second device, and receiving the first query information obtained by the second device based on the predicted query information; or displaying the predicted query information and a query input field on an information display interface; and obtaining the first query information in response to a query operation for the predicted query information on the information display interface or in response to query information input in the query input field. In this way, query information that the user may be interested in is predicted based on the historical dialog record selected by the user. The user may select the query information based on an interest and perform search, to implement a cross-topic, cross-record, and cross-time multi-round interaction experience.

In a possible implementation, after obtaining the reply data of the second query information based on the second query information, the method further includes: performing query recommendation prediction based on the second query information and the target historical dialog record, to obtain recommended query information, where the first query result includes the recommended query information and the reply data of the second query information. In this way, a query prediction function can be provided for the user, to improve participation and operability of the user in an interaction process, reduce unnecessary input of the user, and expand more possibilities for a dialog interaction system.

According to a second aspect, a dialog interaction method is provided and applied to a second device. The method includes: receiving first query information input by a user; sending the first query information and a target historical dialog record to a first device, where the target historical dialog record is a historical dialog record that is in a multi-round historical dialog record and that is associated with the first query information; receiving a first query result from the first device, where the first query result includes reply data of second query information, and the second query information is query information obtained by performing query rewriting on the first query information by the first device based on the target historical dialog record; and displaying the first query result on a first result interface.

According to the solution provided in the second aspect, a historical dialog record associated with query information is obtained, and query rewriting is performed based on the associated historical dialog record and the query information, to improve accuracy of the query information, improve accuracy of reply data of the query information, and improve interaction accuracy.

In a possible implementation, the target historical dialog record is a historical dialog record that is in the multi-round historical dialog record and whose similarity to the first query information meets a specified threshold. In this way, the historical dialog record can be screened based on a similarity, to reduce impact of unrelated historical dialog records on a subsequent procedure, and improve accuracy of dialog interaction.

In a possible implementation, after displaying the first query result on the first result interface, the method further includes: sending a query instruction for the first query information to the first device in response to a query operation of the user for the first query information; receiving a second query result from the first device, where the second query result includes reply data of the first query information; and displaying the second query result on a second result interface.

For example, the first result interface displayed by the second device may include a query control for the first query information, and query information only for the first query information is initiated via the query control. In this way, the query control for the first query information is provided for the user while the first query result is displayed, so that more accurate content required by the user can be obtained, and an accurate and efficient interaction experience is provided for the user.

In a possible implementation, before receiving the first query information input by the user, the method further includes: displaying a dialog record interface, where the dialog record interface includes the multi-round historical dialog record; obtaining the target historical dialog record in the multi-round historical dialog record in response to a dialog select operation of the user on the dialog record interface; sending a dialog fusion search instruction for the target historical dialog record to the first device in response to a dialog fusion search operation of the user; receiving predicted query information obtained by the first device based on the target historical dialog record; and displaying the predicted query information on an information display interface, where the information display interface further includes a query input field, and the first query information is one piece of the predicted query information or query information input in the query input field. In this way, a dialog record select function can be provided for the user, to support the user in randomly selecting a plurality of historical dialog records for fusion search, and implement cross-topic, cross-record, and cross-time dialog interaction of the user, thereby improving flexibility and diversity of dialog interaction.

In a possible implementation, a query result returned by the first device further includes recommended query information corresponding to query information, and the first query information is one piece of recommended query information included in a query result of a previous round of dialog. In this way, a query prediction function can be provided for the user, to improve participation and operability of the user in an interaction process, reduce unnecessary input of the user, and expand more possibilities for a dialog interaction system.

In a possible implementation, before sending the first query information and the target historical dialog record to the first device, the method further includes: importing the multi-round historical dialog record in response to an import operation of the user. In this way, a dialog record import function is provided, to implement non-consecutive dialog interaction of the user.

In a possible implementation, after displaying the first result interface, the method further includes: exporting the multi-round historical dialog record and a current-round dialog record in response to an export operation of the user, where the current-round dialog record includes the first query information and the first query result. In this way, a dialog record export function is provided, so that the user can conveniently review and archive the historical dialog record offline, and can conveniently backtrack the historical dialog record.

According to a third aspect, an electronic device is provided. The electronic device includes: a display, configured to display an interface; a transceiver, configured to send and receive a radio signal; a memory, configured to store computer program instructions; and a processor, configured to execute the computer program instructions, to support the electronic device in implementing the method according to any one of the possible implementations of the first aspect or the method according to any one of the possible implementations of the second aspect.

According to a fourth aspect, a computer-readable storage medium is provided. The computer-readable storage medium stores computer program instructions. When the computer program instructions are executed by a processing circuit, the method according to any one of the possible implementations of the first aspect or the method according to any one of the possible implementations of the second aspect is implemented.

According to a fifth aspect, a dialog interaction system is provided, and includes a first device and a second device. The first device includes a first module configured to implement the method according to any one of the possible implementations of the first aspect, and the second device includes a second module configured to implement the method according to any one of the possible implementations of the second aspect. The first module and the second module are obtained by training a same base model.

According to a sixth aspect, a chip system is provided. The chip system includes a processing circuit and a storage medium. The storage medium stores computer program instructions. When the computer program instructions are executed by the processing circuit, the method according to any one of the possible implementations of the first aspect or the method according to any one of the possible implementations of the second aspect is implemented.

According to a seventh aspect, a computer program product including instructions is provided. When the computer program product runs on a computer, the computer is enabled to perform the method according to any one of the possible implementations of the first aspect or the method according to any one of the possible implementations of the second aspect.

### BRIEF DESCRIPTION OF DRAWINGS

FIG. 1 is a diagram of a structure of a terminal device according to an embodiment of this application;
FIG. 2 is a diagram of functional modules of a terminal device according to an embodiment of this application;
FIG. 3 is a diagram of an architecture of a dialog interaction system according to an embodiment of this application;
FIG. 4 is a schematic flowchart 1 of a dialog interaction method according to an embodiment of this application;
FIG. 5 is a diagram of a query information input interface according to an embodiment of this application;
FIG. 6 is a diagram 1 of a result interface according to an embodiment of this application;
FIG. 7 is a diagram 2 of a result interface according to an embodiment of this application;
FIG. 8 is a diagram 3 of a result interface according to an embodiment of this application;
FIG. 9 is a diagram 4 of a result interface according to an embodiment of this application;
FIG. 10 is a diagram 5 of a result interface according to an embodiment of this application;
FIG. 11 is a schematic flowchart 2 of a dialog interaction method according to an embodiment of this application;
FIG. 12 is a diagram 1 of an interaction time sequence of a dialog interaction method according to an embodiment of this application;
FIG. 13(a) to FIG. 13(d) are a diagram 1 of interface interaction of a multi-round dialog according to an embodiment of this application;
FIG. 14 is a diagram 1 of interface switching according to an embodiment of this application;
FIG. 15 is a schematic flowchart 3 of a dialog interaction method according to an embodiment of this application;
FIG. 16 is a diagram 2 of interface switching according to an embodiment of this application;
FIG. 17 is a diagram 3 of interface switching according to an embodiment of this application;
FIG. 18 is a diagram of an information display interface according to an embodiment of this application;
FIG. 19 is a diagram 2 of an interaction time sequence of a dialog interaction method according to an embodiment of this application;
FIG. 20(a) to FIG. 20(d) are a diagram 2 of interface interaction of a multi-round dialog according to an embodiment of this application;
FIG. 21 is a diagram 6 of a result interface according to an embodiment of this application;
FIG. 22 is a diagram of exporting a historical dialog record according to an embodiment of this application;
FIG. 23 is a diagram of importing a historical dialog record according to an embodiment of this application;
FIG. 24 is a schematic flowchart 4 of a dialog interaction method according to an embodiment of this application; and
FIG. 25 is a schematic flowchart 5 of a dialog interaction method according to an embodiment of this application.

### DESCRIPTION OF EMBODIMENTS

The following describes technical solutions in embodiments of this application with reference to accompanying drawings in embodiments of this application.

The terms "including" and "having" and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features.

In embodiments of this application, the term like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term like "example" or "for example" is intended to present a related concept in a specific manner.

In descriptions of embodiments of this application, unless otherwise stated, "a plurality of" means two or more than two. A term "and/or" in this specification describes only an association relationship between associated objects and indicates that there may be three relationships. For example, A and/or B may represent the following three cases: Only A exists, both A and B exist, and only B exists.

As described in the background, as artificial intelligence technologies develop, an interaction system has been used in more electronic devices, for example, mobile phones, tablet computers, and intelligent robots. The interaction system provides a user with an interaction manner for performing a dialog via a machine. The dialog between the interaction system and the user may be classified into a single-round dialog and a multi-round dialog. The single-round dialog is usually in a form of one question and one answer. The user raises a question or sends a request, and the system identifies user's intention, and answers the question or performs a specific operation. The multi-round dialog is usually in a form of multiple questions and multiple answers.

Currently, for a multi-round interaction system, interaction is usually performed in the following two manners. In a first manner, context information is first captured by using a multi-information embedding mechanism, and a reply is generated based on the context information. For example, multi-round historical dialog information may be first obtained, preprocessing is performed on the multi-round historical dialog information, preprocessed multi-round historical dialog information passes through a multi-dimensional word-level encoder based on the multi-information embedding mechanism, to obtain a sentence vector, the sentence vector is input into a discourse-level encoder, to obtain a discourse-level encoding vector, and the discourse-level encoding vector is decoded via a decoder to generate a reply. In a second manner, multi-round interaction is implemented by performing backtracking calculation on a historical dialog by using a plurality of cascaded functions. For example, a target function corresponding to a user requirement is invoked based on user requirement information, and then a cascaded function of the target function and a trigger expression of the cascaded function are obtained.

In the first manner, a system architecture is a combination of a plurality of technical points, including but not limited to vector encoding, decoding, an attention mechanism, and vector feature fusion, and has high complexity and high technical costs. In addition, when a multi-round dialog is implemented, the consecutive multi-round historical dialog information is used, and preprocessing on the multi-round historical dialog information is limited to a character level. As a result, if the multi-round historical dialog information includes a plurality of unrelated topics, a reply may be inaccurate.

In the second manner, when backtracking calculation is performed on the historical dialog by using the plurality of cascaded functions, once a user inputs a question unrelated to the historical dialog, the fixed cascaded functions cannot be used to accurately determine whether a current question is related to the historical dialog. As a result, a multi-round dialog generation result is inaccurate.

In other words, a current multi-round dialog is mostly based on a same dialog topic. When a plurality of different dialog topics appear in an interaction process, interaction accuracy is poor, and an answer to a question may be irrelevant in the dialog.

Further, the current multi-round dialog interaction system has a single function. If multiple functions are required, different policies need to be designed for different functions. This requires rich expert knowledge and high labor and time costs. Consequently, the current multi-round dialog interaction system has simple functions, poor scalability, slow architecture and function iteration, and slow user operation experience improvement.

In addition, the current multi-round dialog interaction system has a single interaction form. In each round, the user is required to manually input information, and cannot perform good context association or pose a question for interaction for cross-topic, cross-record, and cross-time content. Further, in the current multi-round dialog interaction system, when the user further poses a question for interaction, user's further question is prone to "subject missing" and "ambiguous reference", causing low interaction accuracy.

For the problems, embodiments of this application provide a dialog interaction method. A historical dialog record associated with query information can be obtained, and query rewriting is performed based on the associated historical dialog record and the query information, to improve accuracy of the query information, improve accuracy of reply data of the query information, and improve interaction accuracy.

In addition, the dialog interaction method provided in embodiments of this application can support a user in independently selecting a historical dialog, and provide cross-record, cross-topic, and cross-time multi-round interaction. The interaction form varies, and flexibility is high.

In some embodiments, the dialog interaction method may be applied to a terminal device. The terminal device may also be referred to as an access terminal, a subscriber unit, a subscriber station, a mobile station, a mobile console, a remote console, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units. The vehicle may use the vehicle-mounted module, the vehicle-mounted assembly, the vehicle-mounted part, the vehicle-mounted chip, or the vehicle-mounted unit that is built in the vehicle, to implement the dialog interaction method provided in this application.

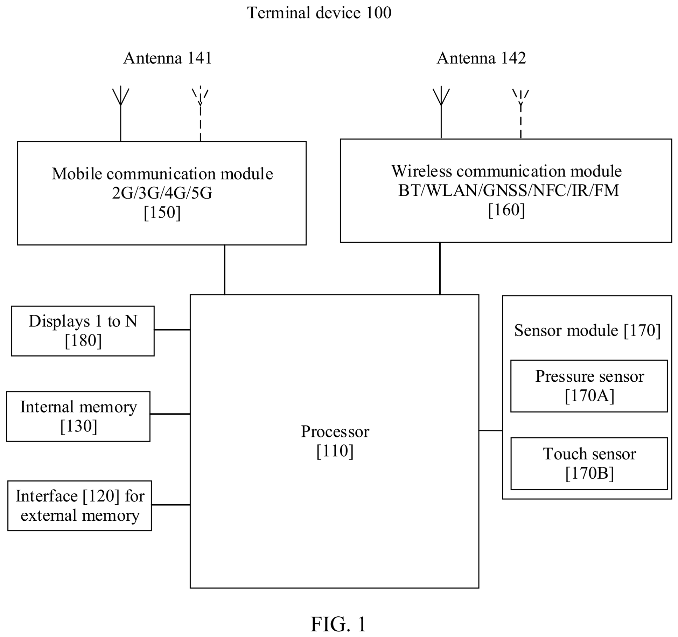

For ease of understanding, FIG. 1 is a diagram of a structure of a terminal device. As shown in FIG. 1, the terminal device 100 may include a processor 110, an interface 120 for external memory, an internal memory 130, an antenna 141, an antenna 142, a mobile communication module 150, a wireless communication module 160, a sensor module 170, a display 180, and the like.

It may be understood that the structure shown in embodiments of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

A wireless communication function of the terminal device 100 may be implemented by using the antenna 141, the antenna 142, the mobile communication module 150, the wireless communication module 160, the modem processor, the baseband processor, and the like.

The antenna 141 and the antenna 142 are configured to transmit and receive an electromagnetic wave signal. Each antenna in the terminal device 100 may be configured to cover one or more communication frequency bands. Different antennas may be further reused, to improve antenna utilization. For example, the antenna 141 may be reused as a diversity antenna of a wireless local area network. In some other embodiments, the antenna may be used in combination with a tuning switch.

The mobile communication module 150 may provide a solution that is applied to the terminal device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 141, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 141. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution that is applied to the terminal device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave by the antenna 142, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 142.

In some embodiments, in the terminal device 100, the antenna 141 is coupled to the mobile communication module 150, and the antenna 142 is coupled to the wireless communication module 160, so that the terminal device 100 can communicate with a network and another device using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 180, the application processor, and the like.

The display 180 is configured to display an image, a video, and the like. In some embodiments, the terminal device 100 may include one or N displays 180, where N is a positive integer greater than 1.

The GPU and the display 180 may be configured to support the terminal device 100 in displaying an interactive interface, where the interactive interface displays content for interacting with the user.

The interface 120 for external memory may be configured to connect to an external storage card, for example, a micro SD card, to extend a storage capability of the terminal device 100. The external memory card communicates with the processor 110 through the interface 120 for external memory, to implement a data storage function. For example, files such as music and videos are stored in the external storage card.

The internal memory 130 may be configured to store computer-executable program code. The executable program code includes instructions. The processor 110 runs the instructions stored in the internal memory 130, to perform various function applications and data processing of the terminal device 100. The internal memory 130 may include a program storage area and a data storage area. The program storage area may store an operating system, an application required by at least one function (for example, a voice playing function or an image playing function), and the like. The data storage area may store data (for example, audio data or an address book) created in a process of using the terminal device 100, and the like. In addition, the internal memory 130 may include a high-speed random access memory, or may include a nonvolatile memory, for example, at least one magnetic disk storage device, a flash memory, or a universal flash storage (universal flash storage, UFS).

The sensor module 170 may include a touch sensor 170B and a pressure sensor 170A.

The pressure sensor 170A is configured to sense a pressure signal, and can convert the pressure signal into an electrical signal. In some embodiments, the pressure sensor 170A may be disposed on the display 180. There are a plurality of types of pressure sensors 170A, such as a resistive pressure sensor, an inductive pressure sensor, and a capacitive pressure sensor. The capacitive pressure sensor may include at least two parallel plates made of conductive materials. When a force is applied to the pressure sensor 170A, capacitance between electrodes changes. The terminal device 100 determines pressure intensity based on a capacitance change. When a touch operation is performed on the display 180, the terminal device 100 detects intensity of the touch operation via the pressure sensor 170A. The terminal device 100 may also calculate a touch position based on a detection signal of the pressure sensor 170A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The touch sensor 170B is also referred to as a "touch panel". The touch sensor 170B may be disposed on the display 180, and the touch sensor 170B and the display 180 constitute a touchscreen, which is also referred to as a "touch screen". The touch sensor 170B is configured to detect a touch operation performed on or near the touch sensor. The touch sensor 170B may transfer the detected touch operation to an application processor, to determine a touch event type, and execute an instruction corresponding to the touch event type, to interact with the user.

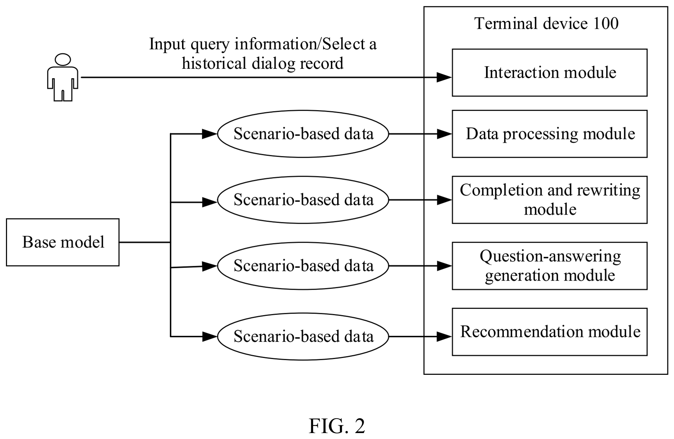

With reference to FIG. 2, to facilitate interaction with the user, and improve interaction accuracy and flexibility, the terminal device 100 provided in embodiments of this application may include the following software functional modules: an interaction module, a data processing module, a completion and rewriting module, a question-answering generation module, and a recommendation module. The interaction module is configured to: sense query information input by the user and transmit the query information to the data processing module, or sense a historical dialog record selected by the user and transmit the historical dialog record to the data processing module. The data processing module is configured to: process the query information, determine a historical dialog record associated with the query information of the user, and integrate the query information and the associated historical dialog record. The completion and rewriting module is configured to rewrite the query information based on the associated historical dialog record, including operations such as subject completion of the query information and elimination of reference of the query information. The question-answering generation module is configured to: query information based on the query information, to obtain reply data of the query information, and display the reply data to the user. The recommendation module is configured to: perform query recommendation prediction based on the query information and the associated historical dialog record, to obtain predicted query information, and display the predicted query information to the user.

In embodiments of this application, the data processing module includes a data processing model, the completion and rewriting module includes a completion and rewriting model, the question-answering generation module includes a question-answering generation model, and the recommendation module includes a recommendation model. The completion and rewriting model, the question-answering generation model, and the recommendation model may be obtained by training a same base model based on scenario-based data of different tasks. The base model may be a generative pre-training (Generative Pre-Training, GPT) model, a pre-trained language model (Generative Language Model), or the like.

In embodiments of this application, a GPT base model may be trained based on scenario-based data of different tasks, to obtain a corresponding model. For example, the GPT base model may be trained based on scenario-based data for data processing, to obtain the data processing model; the GPT base model may be trained based on scenario-based data for completion and rewriting, to obtain the completion and rewriting model; the GPT base model may be trained based on scenario-based data for question-answering generation, to obtain the question-answering generation model; and the GPT base model may be trained based on scenario-based data for query recommendation, to obtain the recommendation model.

It may be understood that the scenario-based data for data processing is data used during data processing training, and may include sample query information and sample historical dialog records associated with the sample query information. The GPT base model is trained based on the scenario-based data for data processing, and after obtaining the query information input by the user, the obtained data processing model may obtain, from a historical dialog record of the user, the historical dialog record associated with the input query information.

The scenario-based data for completion and rewriting is data used during completion and rewriting training, and may include sample query information, a sample historical dialog record, and sample rewritten query information. The GPT base model is trained based on the scenario-based data for completion and rewriting, and the obtained completion and rewriting model may rewrite, based on the associated historical dialog record, the query information input by the user, to obtain rewritten query information.

The scenario-based data for question-answering generation is data used during question-answering generation training, and may include sample query information, sample queried data, and sample reply data. The GPT base model is trained based on the scenario-based data for question-answering generation, and the obtained question answer-generation model may perform information organization on queried data corresponding to the query information, to obtain reply data. In embodiments of this application, information organization on the queried data is mainly extracting main content from the queried data to generate the reply data, and remarking a content source address for each piece of content in the reply data. For example, for query information A, after information is queried, it may be obtained that queried data includes a web page A and a web page B. Content on the web page A is extracted to obtain a query result A, and content on the web page B is extracted to obtain a query result B. Then, reply data is generated based on the query result A and the query result B. The reply data also includes a source address of the query result A, namely, a web page address of the web page A, and a source address of the query result B, namely, a web page address of the web page B.

The scenario-based data for query recommendation is data used during query information recommendation training, and may include sample historical records, sample query information, and sample recommended query information. The GPT base model is trained based on the scenario-based data for query recommendation, to obtain the recommendation model, and the obtained recommendation model may perform query recommendation prediction based on the query information and the historical dialog record, to obtain the predicted query information.

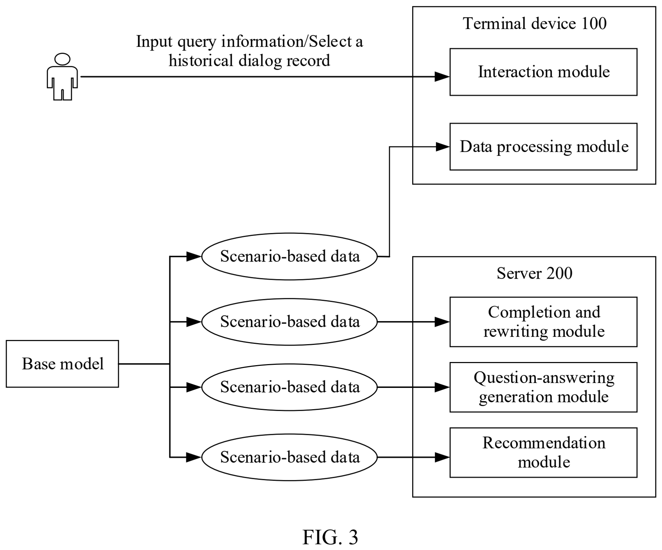

A limited computing capability is considered. In some embodiments, the dialog interaction method may also be applied to an interaction system. As shown in FIG. 3, the interaction system provided in embodiments of this application may include a terminal device 100 and a server 200, and a communication connection may be established between the terminal device 100 and the server 200.

The server 200 may be a cloud server. The cloud server may run one or more application services. The terminal device 100 may be connected to the cloud server through the internet, and use the one or more application services on the cloud server.

It may be understood that the cloud server may be a single server, or may be a server cluster including multiple servers.

The terminal device 100 may include an interaction module and a data processing module, and the server 200 may include a completion and rewriting module, a question-answering generation module, and a recommendation module. The terminal device 100 may sense, via the interaction module, query information input by a user or a historical dialog record selected by the user, process the query information via the data processing module, determine a historical dialog record associated with the query information of the user, integrate the query information and the associated historical dialog record, and send, to the server 200, the query information and the associated historical dialog record that are integrated. The server 200 rewrites the query information via the completion and rewriting module based on the associated historical dialog record, queries information about rewritten query information via the question-answering generation module, to obtain reply data of the query information, sends the reply data to the terminal device 100, performs query recommendation prediction on the query information and the associated historical dialog record via the recommendation module, to obtain predicted query information, and sends the predicted query information to the terminal device 100.

It may be understood that after receiving the reply data and the predicted query information, the terminal device 100 may display the reply data and the predicted query information, to implement dialog interaction.

In some implementations, the terminal device 100 may include the interaction module, and the server 200 may include the data processing module, the completion and rewriting module, the question-answering generation module, and the recommendation module. It may be understood that for functions of the modules included in the terminal device 100 and the server 200, refer to the foregoing descriptions. Details are not described herein again.

Compared with those in an existing dialog interaction system, in embodiments of this application, the data processing module, the completion and rewriting module, the question-answering generation module, and the recommendation module are obtained by training the same base model based on different scenario-based data. The architecture is simple and clear, and has strong scalability. Implementation and iteration of functional modules are simple and convenient, and a plurality of functions for improving an interaction experience can be integrated.

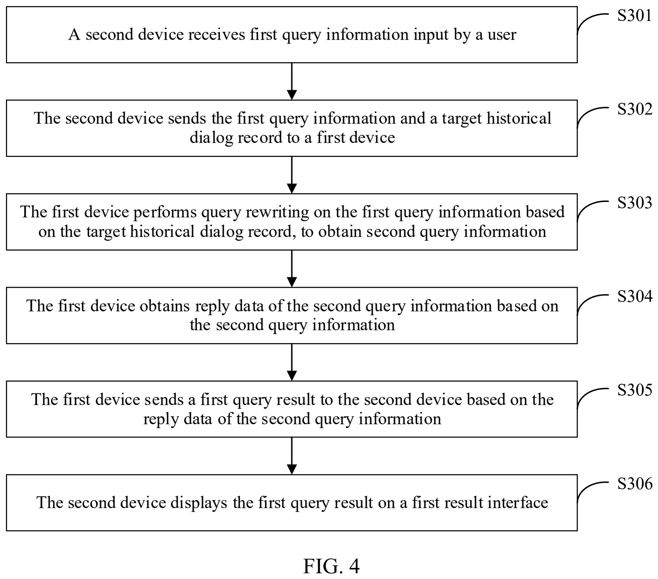

The following uses a dialog interaction system as an example to describe in detail the dialog interaction method provided in embodiments of this application. The dialog interaction system includes a first device and a second device, where the first device may be a server, and the second device may be a terminal device. An example in which the first device includes a completion and rewriting module, a question-answering generation module, and a recommendation module, and the second device includes an interaction module and a data processing module is used for description. FIG. 4 is a schematic flowchart of a dialog interaction method according to an embodiment of this application. As shown in FIG. 4, the dialog interaction method provided in this embodiment of this application may include step S301 to step S306.

S301: A second device receives first query information input by a user.

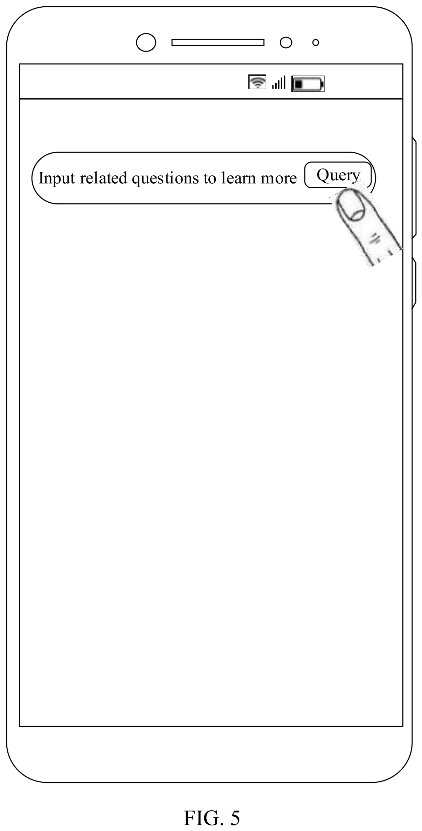

For example, as shown in FIG. 5, the second device may provide a user with an interface. The interface includes a query information input field and a query control. The user may input, in the query information input field, the first query information that needs to be queried. After inputting the first query information in the query information input field, the user taps the query control, and the second device obtains, in response to the tap operation of the user, the first query information input by the user.

In some content browsing scenarios, the interface may be a content interface browsed by the user. The query information input field is set on the content interface. When the user needs to query content in which the user is interested in a browsing process, the user may input corresponding query information in the query information input field. In some advertisement recommendation scenarios, the interface may be an advertisement playing interface. The query information input field is set on the advertisement playing interface. When the user needs to query an advertisement product in an advertisement watching process, the user may input corresponding query information in the query information input field. This may be specifically set based on a service requirement. This is not specifically limited in this application.

In some implementations, the first query information may alternatively be input by the user on another device, and is transmitted to the second device via the another device.

It may be understood that the first query information may be information that the user needs to query, and may be specifically determined based on input of the user. This is not specifically limited in this application.

It may be understood that the second device may detect the operation of the user via an interaction module, to obtain the first query information input by the user.

S302: The second device sends the first query information and a target historical dialog record to a first device.

The target historical dialog record is a historical dialog record associated with the first query information.

In this embodiment of this application, the second device may store a historical dialog record of the user. After obtaining the first query information, the second device may process the first query information and the historical dialog record via a data processing module, to obtain, from the historical dialog record, the target historical dialog record associated with the first query information.

It may be understood that each round of historical dialog record includes at least one piece of query information and reply data of the query information. For example, when query information input by a user at a time is "What is the weather like in the next 15 days" and reply data fed back is "The weather in the next 15 days is XXXX", a corresponding dialog record includes content "What is the weather like in the next 15 days" and "The weather in the next 15 days is XXXX".

In this embodiment of this application, when determining the target historical dialog record associated with the first query information, similarity calculation may be separately performed on the first query information and the stored multi-round historical dialog record, to obtain a similarity between the first query information and each round of historical dialog record. After the similarity between the first query information and each round of historical dialog record is obtained, a historical dialog record whose similarity meets a specified threshold is determined as the target historical dialog record. In other words, the target historical dialog record is a historical dialog record that is in the multi-round historical dialog record and whose similarity to the first query information meets the specified threshold. The specified threshold may be set based on an actual requirement, and is not specifically limited in embodiments of this application.

It may be understood that the data processing module includes a data processing model, and the data processing model is obtained by training a GPT base model based on scenario-based data for data processing. Therefore, after the first query information and the multi-round historical dialog record are input into the data processing model, the data processing model may perform feature processing on the first query information and the multi-round historical dialog record, to obtain similarities between the first query information and the stored multi-round historical dialog record, and output, based on the similarities, the target historical dialog record associated with the first query information.

Optionally, when determining the similarities between the first query information and the stored multi-round historical dialog record, key information of the first query information and key information of each round of historical dialog record may be first determined, and then the key information of the first query information and the key information of each round of historical dialog record are matched, to obtain a matching degree between the key information of the first query information and the key information of each round of historical dialog record. The similarity between the first query information and each round of historical dialog record is obtained based on the matching degree between the key information of the first query information and the key information of each round of historical dialog record.

For example, when the key information of the first query information Q includes key information A1, key information A2, key information A3, and key information A4, if key information of a historical dialog record L1 includes key information A1 and key information A5, key information of a historical dialog record L2 includes key information A1, key information A2, key information A3, and key information A6, and key information of a historical dialog record L3 includes key information A3 and key information A5, and a matching degree is set to a quantity of pieces of matched key information/a total quantity of pieces of key information of the first query information, a matching degree of the key information of the first query information Q and the key information of the historical dialog record L1 is 1/4, a matching degree of the key information of the first query information Q and the key information of the historical dialog record L2 is 3/4, and a matching degree of the key information of the first query information Q and the key information of the historical dialog record L3 is 1/4. Therefore, a similarity between the first query information Q and the historical dialog record L1 may be 1/4, a similarity between the first query information Q and the historical dialog record L2 may be 3/4, and a similarity between the first query information Q and the historical dialog record L3 may be 1/4.

Key information may be a topic tag of a dialog. For example, for a dialog about a mobile phone, key information may include a technology, an electronic product, a production date, a production place, and the like. For another example, for a dialog about a person, key information may include a person, an occupation, a nationality, a region, and the like.

After the first query information and the target historical dialog record corresponding to the first query information are obtained, the first query information and the target historical dialog record may be sent to the first device.

It may be understood that when the second device does not store the multi-round historical dialog record of the user, that is, the first query information is query information of a first dialog, only the first query information may be sent to the first device, and the target historical dialog record may be empty.

In this embodiment of this application, the historical dialog record is screened, to reduce impact of an unrelated historical dialog record on a subsequent procedure (for example, query information rewriting and query recommendation), and improve accuracy of dialog interaction.

S303: The first device performs query rewriting on the first query information based on the target historical dialog record, to obtain second query information.

The second device may send an information search instruction to the first device based on the first query information and the target historical dialog record. The information search instruction includes the first query information and the target historical dialog record, and the information search instruction instructs a completion and rewriting module of the first device to perform query rewriting on the first query information based on the target historical dialog record, to query information based on rewritten first query information.

For example, after receiving the information search instruction, the first device may input the target historical dialog record and the first query information into a completion and rewriting model of the completion and rewriting module in response to the information search instruction, and the completion and rewriting model performs query rewriting.

In some embodiments, the second device may further directly input the first query information and the target historical dialog record into the completion and rewriting model of the completion and rewriting module.

It may be understood that the completion and rewriting model is obtained by training the GPT base model based on scenario-based data for completion and rewriting. Therefore, after the first query information and the target historical dialog record are input into the completion and rewriting model, the completion and rewriting model can rewrite the first query information based on the target historical dialog record, and output the rewritten query information.

A multi-round historical dialog scenario is considered. The user usually continues a next round of dialog based on a previous dialog. However, when performing the next round of dialog, the user usually omits a subject or uses a pronoun, and the like. As a result, information expressed by query information in the next round of dialog is incomplete, and an answer to a question may be irrelevant in the dialog. Therefore, in this embodiment of this application, rewriting the first query information may include subject completion, pronoun replacement, and the like.

The subject completion means that when the first query information lacks a subject, the subject is completed to the first query information. For example, subject information may be determined based on the target historical dialog record, and then the subject information is added to the first query information. For example, the target historical dialog record is "What is the age of A" and the first query information is "What are the works". After the target historical dialog record and the first query information are input into the completion and rewriting model, the completion and rewriting model analyzes the target historical dialog record and the first query information, obtains the subject information "A" from the target historical dialog record, and then adds the subject information "A" to the first query information to obtain "What are the works of A". In other words, the second query information is "What are the works of A". For another example, the target historical dialog record includes "What is the age of A" and "B's hometown", and the first query information is "Whether there is a collaborative experience". After the target historical dialog record and the first query information are input into the completion and rewriting model, the completion and rewriting model analyzes the target historical dialog record and the first query information, obtains the subject information "A" and "B" from the target historical dialog record, and then adds the subject information "A" and "B" to the first query information to obtain "Whether A and B have a collaborative experience". In other words, the second query information is "Whether A and B have a collaborative experience".

Pronoun replacement is replacing a pronoun in the first query information when the pronoun appears in the first query information. For example, subject information may be determined based on the target historical dialog record, and the pronoun in the first query information is replaced based on the subject information. For example, the target historical dialog record is "What is the age of A" and the first query information is "What are his works". After the target historical dialog record and the first query information are input into the completion and rewriting model, the completion and rewriting model analyzes the target historical dialog record and the first query information, obtains the subject information "A" from the target historical dialog record and the pronoun "he" in the first query information, and then replaces the pronoun in the first query information with the subject information, to obtain "What are the works of A". In other words, the second query information is "What are the works of A". For another example, the target historical dialog record includes "What is the age of A" and "B's hometown", and the first query information is "Whether they have a collaborative experience". After the target historical dialog record and the first query information are input into the completion and rewriting model, the completion and rewriting model analyzes the target historical dialog record and the first query information, obtains the subject information "A" and "B" from the target historical dialog record and the pronoun "they" in the first query information, and then replaces the pronoun in the first query information with the subject information "A" and "B" to obtain "Whether A and B have a collaborative experience". In other words, the second query information is "Whether A and B have a collaborative experience". It may be understood that subject completion and pronoun replacement are examples of rewriting the first query information. In some embodiments, rewriting the first query information may further include another manner, for example, may further include replacing a wrong word in the first query information. Specifically, scenario-based data may be used to train the GPT base model based on a requirement. It may be understood that the completion and rewriting model obtained through training may rewrite the first query information based on a requirement.

In this embodiment of this application, the query information is rewritten, to improve integrity and accuracy of the query information, and improve accuracy of dialog interaction.

S304: The first device obtains reply data of the second query information based on the second query information.

After obtaining the second query information, the first device may invoke a search engine, to query information based on the second query information to obtain queried data, and then input the queried data into a question-answering generation model of a question-answering generation module. The question-answering generation model performs information organization, and outputs the reply data of the second query information.

That the queried data obtained by querying the information based on the second query information is web page data, and the web page data may include some unrelated content is considered. To accurately hit content that the user wants to learn of, in this embodiment of this application, information organization on the queried data includes content extraction on the web page data, to extract content related to the second query information from the web page data and generate the reply data. In other words, the reply data includes the content that is in the web page data and that is related to the second query information.

That in actual application, there may be a plurality of pieces of web page data after the information is queried is considered. To facilitate the user in obtaining an accurate query result, in this embodiment of this application, information organization on the queried data may further include integration of web page content of each piece of web page data. When the web page content of each piece of web page data is integrated and sorted, content extraction may be first performed on each piece of web page data, to extract content related to the second query information from each piece of web page data, and then the related content is integrated, to obtain the reply data. In this way, the related content is integrated, so that duplicate content can be deleted, a coherent sentence is ensured, and the user can also obtain the accurate query result.

To help the user understand a source of the reply data and query more detailed information, in this embodiment of this application, the generated reply data further includes a source address of each content, namely, a web page address of a web page in which the content is located. In this way, when the user needs to query more detailed information, the user may query a related web page based on a source address.

It may be understood that the question-answering generation model is obtained by training the GPT base model based on scenario-based data for question-answering generation. Therefore, after the second query information and the queried data corresponding to the second query information are input into the question-answering generation model, the question-answering generation model may perform operations such as content extraction and integration on the queried data, and output the reply data of the second query information.

It may be understood that content extraction and integration are examples of information organization on the queried data. In some embodiments, information organization on the queried data may further include another manner. For example, relevance sorting may alternatively be performed on related content of each web page data, and the related content of each web page data is integrated based on relevance sorting. Specifically, scenario-based data may be used to train the GPT base model based on a requirement. It may be understood that the question-answering generation model obtained through training can perform information organization on the queried data based on a requirement.

In this embodiment of this application, the question-answering generation model performs information organization on the queried data corresponding to the query information, so that redundant information can be deleted, and the content that the user wants to learn of can be accurately hit. The source address is provided, so that the user can query the detailed information, thereby improving user experience.

S305: The first device sends a first query result to the second device based on the reply data of the second query information.

S306: The second device displays the first query result on a first result interface.

After obtaining the reply data of the second query information, the first device may send the first query result to the second device, where the first query result includes the reply data of the second query information. After receiving the first query result, the second device displays the first query result to the user on the first result interface. In this way, the user can obtain the query result of the first query information, to implement dialog interaction.

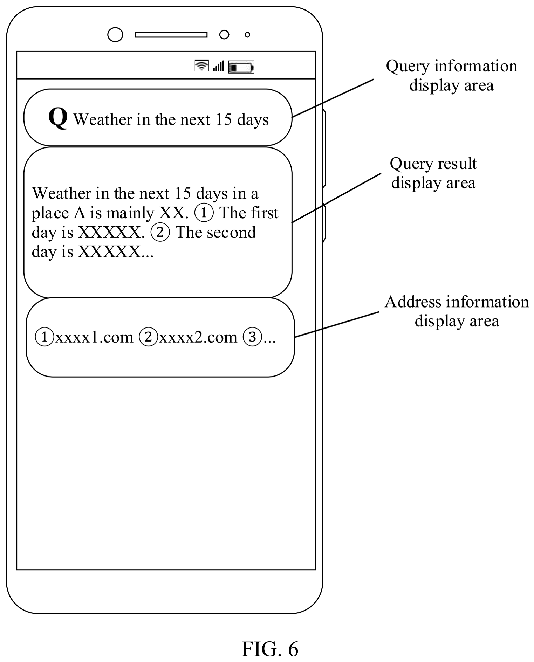

In this embodiment of this application, the first result interface includes a query information display area, a query result display area, and an address information display area. The query information display area displays the query information, the query result display area displays the reply data, and the address information display area displays the source address of the content in the reply data. As shown in FIG. 6, an example in which first query information input by a user is "Weather in the next 15 days" and a first query result includes reply data of second query information "Weather in the next 15 days in a place A" is used for description. In FIG. 6, a query information display area displays the first query information, namely, "Weather in the next 15 days". A query result display area displays the reply data of the second query information, namely, the reply data of "Weather in the next 15 days in a place A", and content in the query result display area is marked with numbers such as ① and ②, where the numbers such as ① and ② are address identifiers corresponding to source addresses of the content. An address information display area displays a source address corresponding to each address identifier.

To improve participation and operability of the user in an interaction process, reduce unnecessary input of the user, and expand more possibilities for a dialog interaction system, in this embodiment of this application, a query prediction function may be further provided for the user. In other words, in this embodiment of this application, the query result returned by the first device may further include recommended query information corresponding to the query information. Based on this, after the reply data of the second query information is obtained based on the second query information, the method provided in this embodiment of this application may further include the following steps.

The first device performs query recommendation prediction based on the second query information and the target historical dialog record, to obtain the recommended query information.

After obtaining the second query information and the target historical dialog record, the first device may input the second query information and the target historical dialog record into a recommendation model of a recommendation module, and perform query recommendation prediction on the target historical dialog record and the second query information by using the recommendation model, to obtain the recommended query information.

It may be understood that the recommendation model is obtained by training the GPT base model based on scenario-based data for query recommendation. Therefore, after the second query information and the target historical dialog record are input into the recommendation model, the recommendation model may perform query recommendation prediction based on the target historical dialog record and the second query information, and output the recommended query information.

Correspondingly, the step of sending, by the first device, the first query result to the second device based on the reply data of the second query information may include the following step.

The first device sends the first query result to the second device based on the recommended query information and the reply data of the second query information.

The first query result may include the recommended query information and the reply data of the second query information.

It may be understood that after receiving the first query result, the second device may display the first query result to the user on the first result interface. In this way, the user can obtain the query result of the first query information and the recommended prediction information for the first query information, to implement dialog interaction.

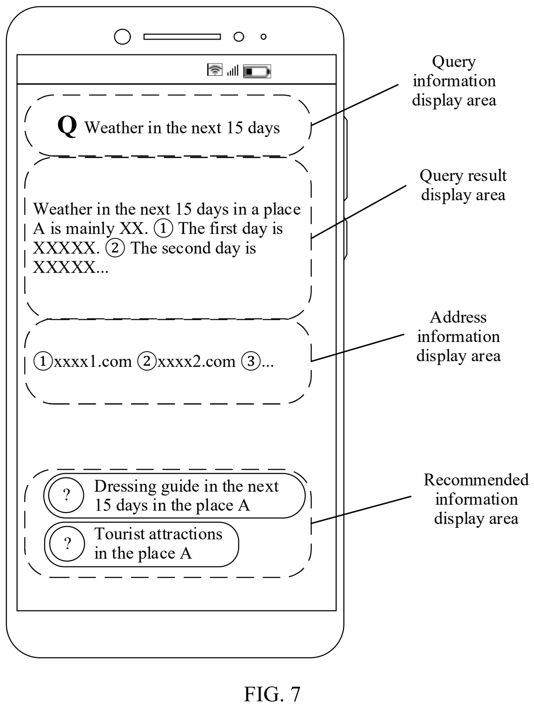

In this embodiment of this application, the first result interface may further include a recommended information display area. As shown in FIG. 7, an example in which first query information input by a user is "Weather in the next 15 days" and a first query result includes reply data of second query information "Weather in the next 15 days in a place A" is used for description. In FIG. 7, a query information display area displays the first query information, namely, "Weather in the next 15 days". A query result display area displays the reply data of the second query information, namely, the reply data of "Weather in the next 15 days in a place A", and content in the query result display area is marked with numbers such as ① and ②, where the numbers such as ① and ② are address identifiers corresponding to source addresses of the content. An address information display area displays a source address corresponding to each address identifier. A recommended information display area displays recommended query information such as "Dressing guide in the next 15 days in the place A" and "Tourist attractions in the place A".

After the recommended query information is displayed, if the user needs to query a piece of recommended query information, the user may tap the recommended query information. In response to the operation of the user, the second device obtains the target recommended query information tapped by the user, then may perform a new round of dialog interaction, and send the target recommended query information and a target historical dialog record associated with the target recommended query information to the first device.

It may be understood that the target recommended query information may be considered as new first query information. For a process of determining the target recommended query information and the target historical dialog record associated with the target recommended query information, refer to a process of determining the first query information and the target historical dialog record associated with the first query information. Correspondingly, after obtaining the target recommended query information and the target historical dialog record associated with the target recommended query information, the first device processes the target recommended query information and the target historical dialog record associated with the target recommended query information. For a processing process, refer to a processing process of the first query information and the target historical dialog record associated with the first query information. Details are not described herein again. For details, refer to step S301 to step S306.

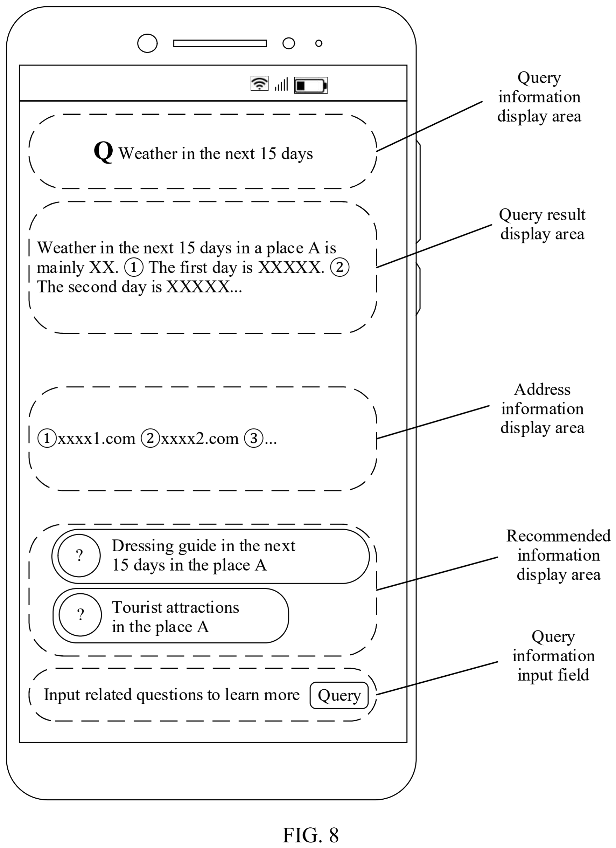

It should be noted that as shown in FIG. 8, the first result interface may further include a query information input field. When the recommended query information does not include query information that the user is interested in, the user may also input, in the query information input field, query information that needs to be queried.

It may be understood that the first query information may be input by the user in the query information input field, or may be one of the recommended query information included in a query result of a previous round of dialog.

According to the dialog interaction method provided in this embodiment of this application, next-round query information of the user is inferred based on a historical dialog record and current query information, to form a guided dialog. This improves participation and operability of the user in the interaction process, reduces operations of the user, and improves user experience.

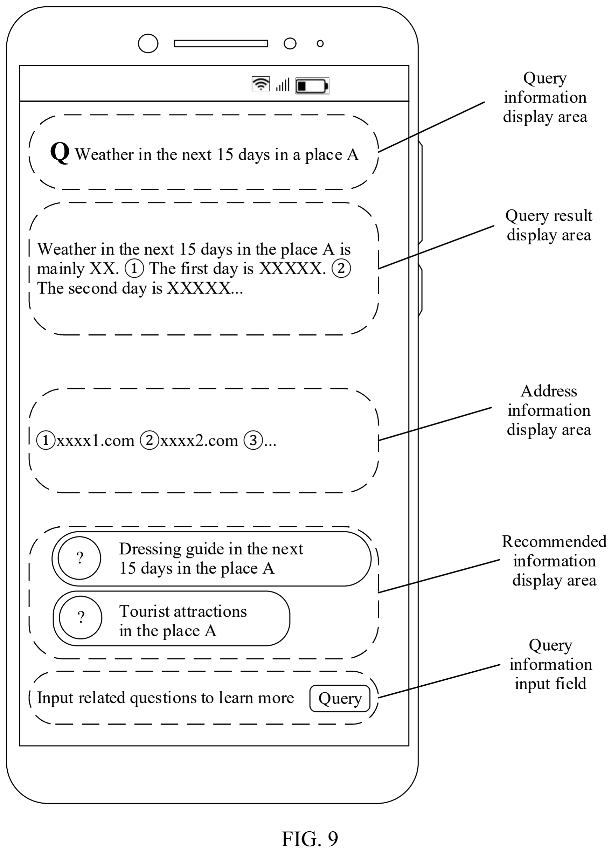

That the displayed reply data is the reply data of the second query information obtained by rewriting the first query information is considered. To facilitate the user in determining correctness of the reply data, in this embodiment of this application, the first query result may further include the second query information. After receiving the first query result, the second device may display the second query information and the reply data of the second query information on the first result interface. In this way, the user can know whether the displayed reply data is a query result that the user wants to query. As shown in FIG. 9, a query information display area displays second query information, namely, "Weather in the next 15 days in a place A". A query result display area displays reply data of the second query information, namely, the reply data of "Weather in the next 15 days in a place A", and content in the query result display area is marked with numbers such as ① and ②, where the numbers such as ① and ② are address identifiers corresponding to source addresses of the content. An address information display area displays a source address corresponding to each address identifier. A recommended information display area displays recommended query information such as "Dressing guide in the next 15 days in the place A" and "Tourist attractions in the place A".

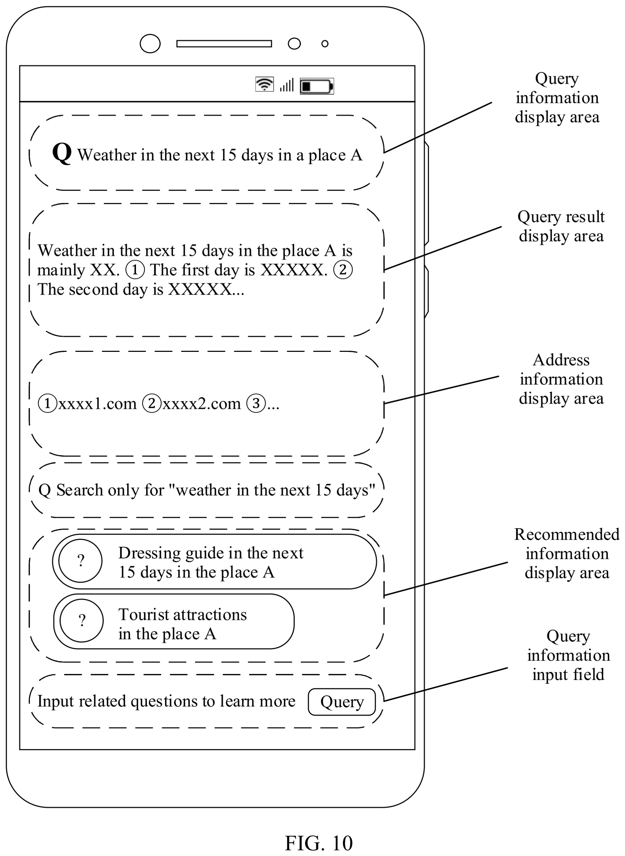

That the reply data of the second query information may not be a result expected by the user in actual application is considered. To accurately obtain content that the user wants to learn of, in embodiments of this application, the first result interface displayed by the second device may further include a query control for the first query information. As shown in FIG. 10, to facilitate user operations, in some embodiments, the query control for the first query information may be displayed as an operation button "search only for" on the first result interface.

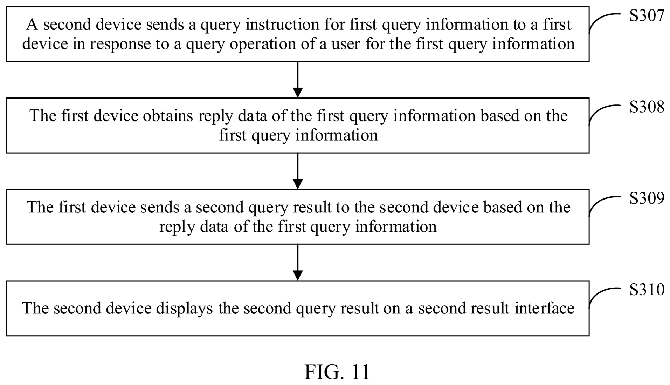

When the reply data of the second query information is not the result expected by the user, the user may operate the query control for the first query information, to indicate to query only the first query information, skip rewriting. Based on this, with reference to FIG. 11, after step S306, the dialog interaction method may further include step S307 to step S310.

S307: The second device sends a query instruction for the first query information to the first device in response to a query operation of the user for the first query information.

When the user wants to query only the first query information, the user may tap the query control for the first query information on the first result interface. The second device may send the query instruction for the first query information to the first device in response to the query operation of the user for the first query information. The query instruction instructs the first device to query information only on the first query information.

It may be understood that the second device may send the query instruction for the first query information to the first device in response to the query operation of the user for the first query information via the interaction module.

S308: The first device obtains reply data of the first query information based on the first query information.

After receiving the query instruction for the first query information from the second device, the first device may respond to the query instruction, invoke a search engine, and query the information based on the first query information, to obtain queried data of the first query information. Then, the first device inputs the queried data of the first query information into the question-answering generation model of the question-answering generation module. The question-answering generation model performs information organization, and outputs the reply data of the first query information. For details, refer to step S304. Details are not described herein again. S309: The first device sends a second query result to the second device based on the reply data of the first query information.

S310: The second device displays the second query result on a second result interface.

After obtaining the reply data of the first query information, the first device may send the second query result to the second device. The second query result includes the reply data of the first query information.

Correspondingly, after obtaining the reply data of the first query information, the first device may also input the first query information and the target historical dialog record into the recommendation model of the recommendation module, and perform query recommendation prediction on the target historical dialog record and the first query information via the recommendation model, to obtain recommended query information corresponding to the first query information. Therefore, in this embodiment of this application, the second query result may also include the reply data of the first query information and the recommended query information corresponding to the first query information.

After receiving the second query result, the second device may display the second result interface, and display the second query result to the user on the second result interface. In this way, the user can obtain the query result of the first query information, to implement dialog interaction.

It may be understood that the second result interface may also include a query information display area, a query result display area, an address information display area, and a recommended information display area. An example in which first query information input by a user is "Person A" and a first query result includes reply data of the first query information "Person A" is used for description. A query information display area on a second result interface displays the first query information, namely, "Person A". A query result display area displays the reply data of the first query information, namely, introduction to "Person A", and content in the query result display area is marked with numbers such as ① and ②, where the numbers such as ① and ② are address identifiers corresponding to source addresses of the content. An address information display area displays a source address corresponding to each address identifier. A recommended information display area displays recommended query information such as "A collaborative history between person A and person B".

In this embodiment of this application, when the first query result is displayed, the query control for the first query information is provided for the user, so that more accurate content required by the user can be obtained, and an accurate and efficient interaction experience is provided for the user.

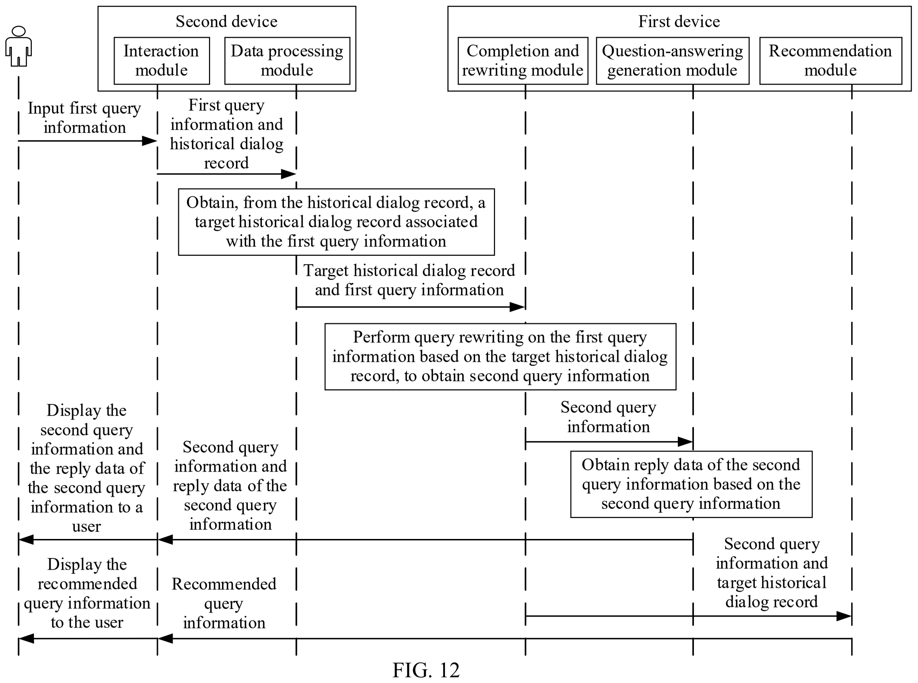

FIG. 12 is a diagram of an interaction time sequence of a dialog interaction method according to an embodiment of this application. As shown in FIG. 12, a second device receives, via an interaction module, first query information input by a user, and then transmits the first query information and a collected historical dialog record of the user to a data processing module. A data processing model of the data processing module processes the first query information and the historical dialog record, obtains, from the historical dialog record, a target historical dialog record associated with the first query information, and sends the target historical dialog record and the first query information to a completion and rewriting module of the first device. A completion and rewriting model of the completion and rewriting module performs query rewriting on the first query information based on the target historical dialog record, to obtain second query information, and sends the second query information to a question-answering generation module. The question-answering generation module obtains reply data of the second query information based on the second query information, that is, invokes a search engine, queries information based on the second query information to obtain queried data, and then inputs the queried data into a question-answering generation model of the question-answering generation module. The question-answering generation model performs information organization, and outputs the reply data of the second query information. After obtaining the reply data of the second query information, the question-answering generation module returns the second query information and the reply data of the second query information to the second device. After obtaining the second query information, the completion and rewriting module may also send the second query information and the target historical dialog record to a recommendation module. A recommendation model of the recommendation module performs query recommendation prediction based on the second query information and the target historical dialog record, to obtain recommended query information, and returns the recommended query information to the second device. After receiving the second query information, the reply data of the second query information, and the recommended query information, the second device displays the second query information, the reply data of the second query information, and the recommended query information.

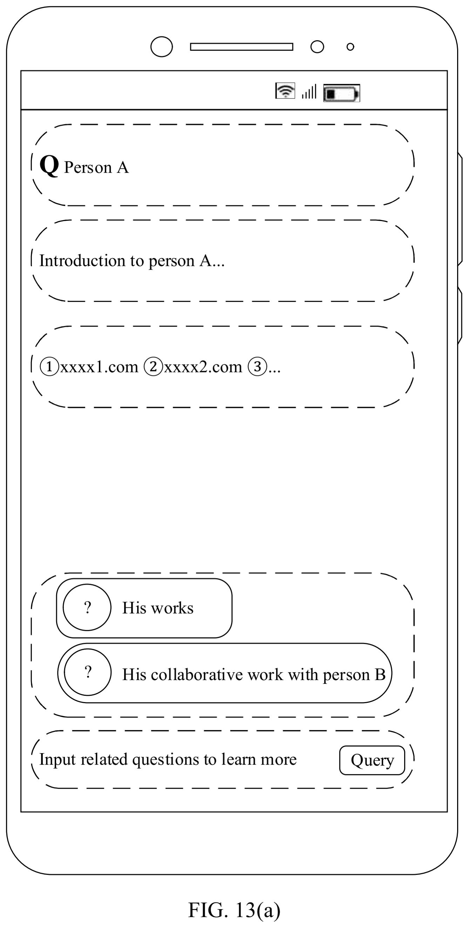

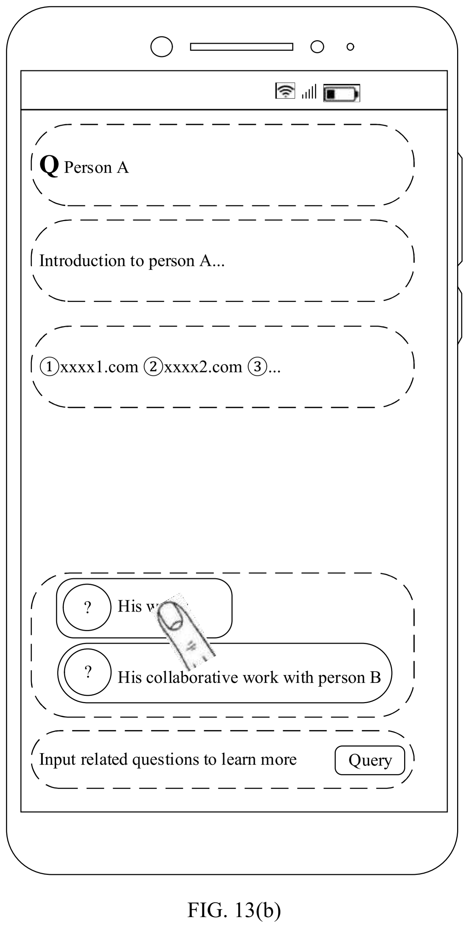

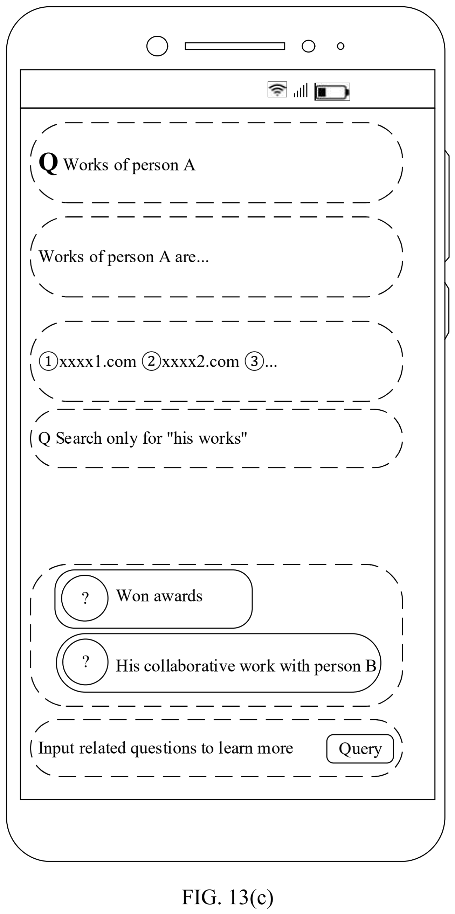

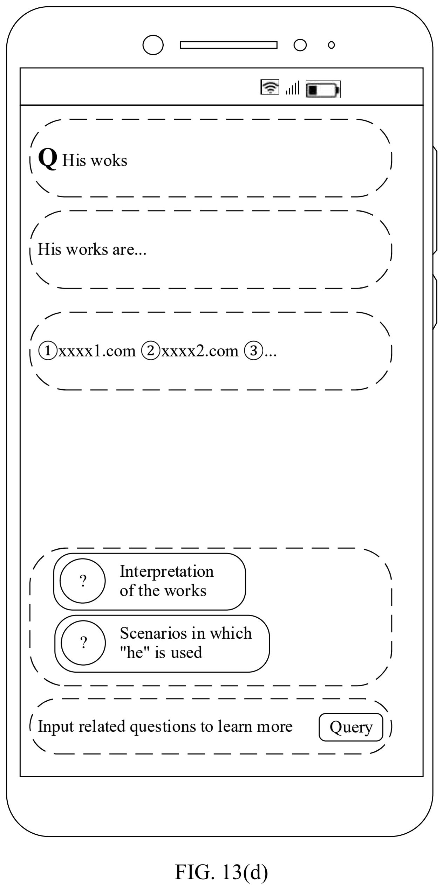

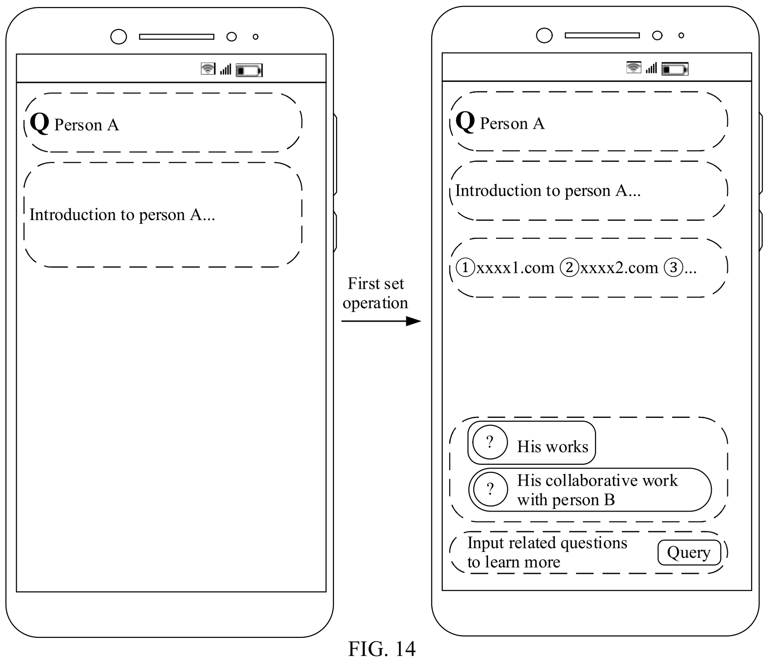

FIG. 13(a) to FIG. 13(d) are a diagram of interface interaction of a multi-round dialog. As shown in FIG. 13(a), on a result interface of a second device, displayed query information is "Person A", reply data is "Introduction to person A", and recommended query information includes "His works" and "His collaborative work with person B". A user may select recommended query information that the user is interested in to initiate a dialog or input query information in a query information input field. As shown in FIG. 13(b), the user selects the recommended query information "His works". In response to the operation of the user, the second device obtains query information "His works", determines an associated target historical dialog record, and then sends the target historical dialog record and the query information to a first device. The first device performs query rewriting based on the target historical dialog record and the query information, to obtain rewritten query information "Works of person A". The first device obtains reply data and next-round recommended query information "Won awards" and "His collaborative work with person B" based on the rewritten query information, and sends the rewritten query information, the reply data, and the next-round recommended query information to the second device. As shown in FIG. 13(c), after receiving the rewritten query information, the reply data, and the next-round recommended query information, the second device displays the rewritten query information, the reply data, and the next-round recommended query information, and displays an operation button "Search only for his works". When the user operates the operation button search only for, the second device sends, in response to the operation of the user, a query instruction related only to "His works" to the first device. The first device returns reply data of "His works" and corresponding recommended query information "Interpretation of the works" and "Scenarios in which "he" is used" to the second device in response to the query instruction. As shown in FIG. 13(d), after receiving the reply data of "His works" and the recommended query information, the second device may display the reply data of "His works" and the recommended query information. To facilitate viewing of the reply data, in embodiments of this application, the second device may provide, to the user, a reply interface for displaying the reply data. The reply interface displays all reply data of the query information, and the result interface may display only a part of the reply data of the query information. When only viewing the reply data, the user may view the reply data on the reply interface. When the user needs to view information such as a source address of content and recommended query information, the user may view the reply data on the result interface. For example, as shown in FIG. 14, after receiving the query result returned by the first device, the second device may display the reply interface, and display the reply data on the reply interface. When the user needs to view information such as the source address, the user may perform a first set operation on the reply interface. The second device displays the result interface in response to the first set operation of the user. The first set operation may be a slide operation, a tap operation, or the like, is not limited in embodiments of this application, and may be specifically set based on an actual requirement.

According to the dialog interaction method provided in embodiments of this application, the historical dialog record is screened, and the associated historical dialog record is selected to perform query rewriting on the query information, to reduce impact of a dialog record with an unrelated topic on the query information, improve accuracy of the query information, improve accuracy of reply data of the query information, and improve interaction accuracy. In addition, the associated historical dialog record is selected to perform query rewriting on the query information, to support the user in simplifying input of the query information in the multi-round interaction process. For example, the user may not need to specify a subject of the query information, and may use a pronoun. In addition, the recommended query information is provided to the user, so that the user can tap the recommended query information to perform a dialog. This simplifies user input and an operation process, and greatly improves user experience.

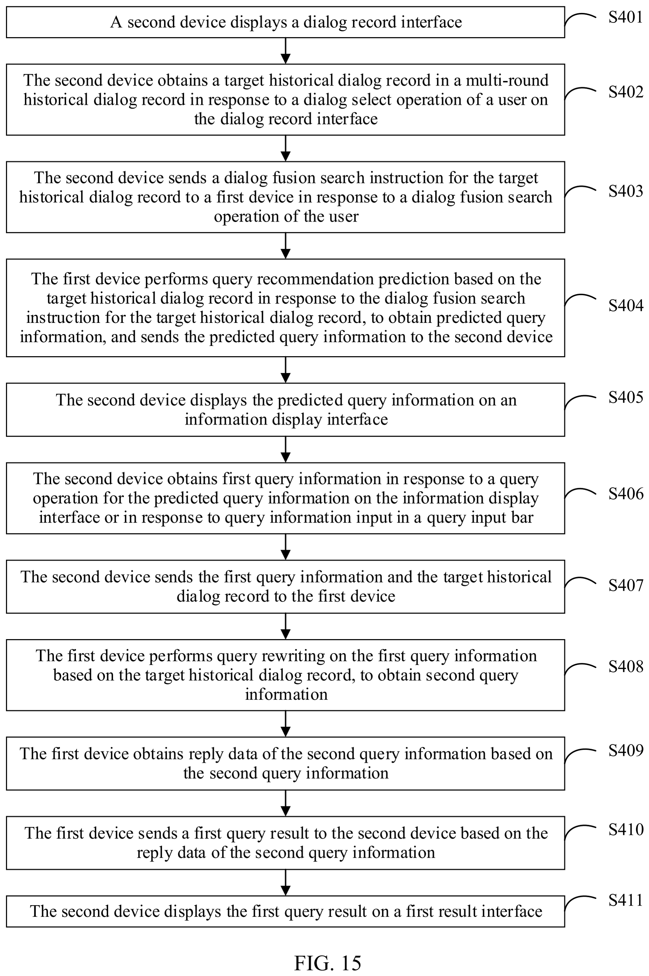

To provide more interaction forms and facilitate cross-context linkage of the user, in embodiments of this application, the user may be further provided with a function of flexibly selecting a historical dialog record for fusion retrieval, to implement across-topic, cross-record, and cross-context proactive linkage interaction of the user. Based on this, with reference to FIG. 15, a dialog interaction method provided in an embodiment of this application may include S401 to S411. S401: A second device displays a dialog record interface.

In a process in which the second device performs dialog interaction with a user, the second device may store a historical dialog record of the user. When the user needs to view the historical dialog record, the user may perform a dialog record view operation on the current interface. The second device displays the dialog record interface to the user in response to the operation of the user. The dialog record interface includes the multi-round historical dialog record of the user.

A current interface may be a result interface, a reply interface, or the like in the dialog interaction process. The dialog record view operation may be a slide or tap operation, or the like, may be specifically set based on an actual requirement. This is not limited in embodiments of this application. The dialog record view operation may vary on different interfaces.

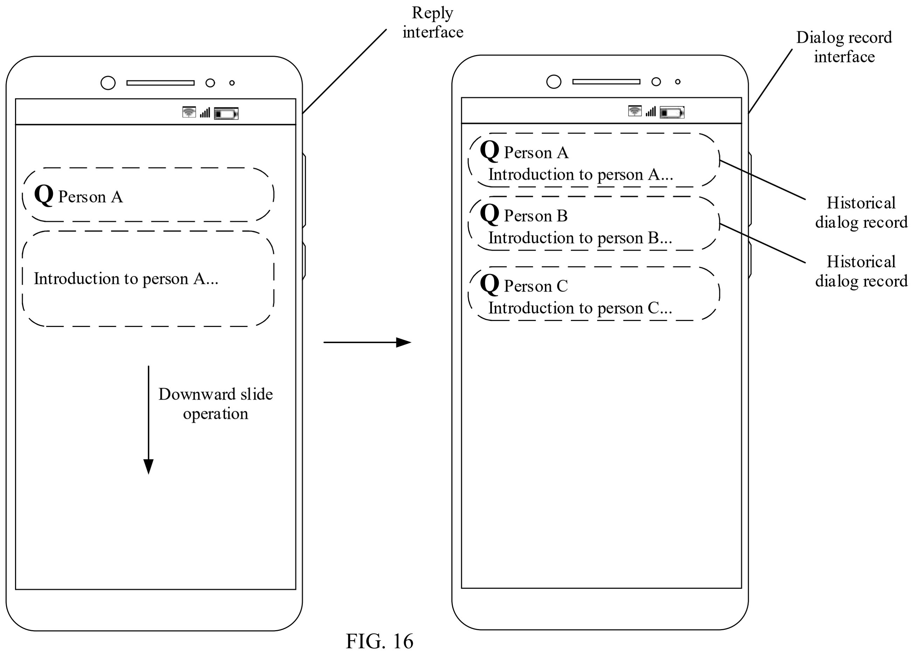

For example, as shown in FIG. 16, an example in which a current interface is a reply interface in a dialog interaction process and a dialog record view operation is a downward slide operation is used for description. When a user needs to view a historical dialog record, the user may perform the downward slide operation on the current reply interface. In response to the operation, a second device displays a dialog record interface.

To facilitate information viewing and increase interaction flexibility and operability, in some embodiments of this application, after the second device displays the dialog record interface, the user performs a second set operation on any historical dialog record on the dialog record interface. The second device displays, in response to the second set operation, a result interface corresponding to the historical dialog record. The second set operation may be set based on an actual requirement, and for example, may be a tap operation, a touch and hold operation, or the like. This is not specifically limited.

It may be understood that when the second device displays the result interface, the user may perform the dialog record view operation on the result interface, and may jump to the dialog record interface.

S402: The second device obtains a target historical dialog record in the multi-round historical dialog record in response to a dialog select operation of the user on the dialog record interface.

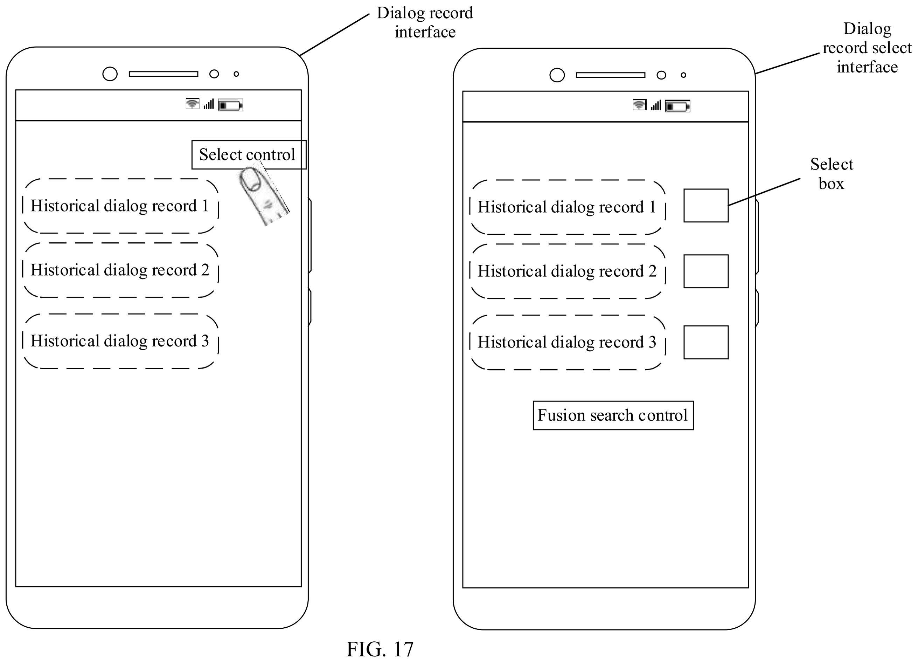

The dialog record interface includes a select control. When the user needs to select a historical dialog record, the user taps the select control, and the second device displays a dialog record select interface in response to the operation of the user. As shown in FIG. 17, each historical dialog record on the dialog record select interface has a select box, and the user may select a historical dialog record in the select box. It may be understood that when the user needs to select a historical dialog record, the user selects a select box of the historical dialog record. The second device responds to the operation of the user, and can obtain the historical dialog record selected by the user. It may be understood that the historical dialog record selected by the user is the target historical dialog record. It may be understood that to facilitate cross-topic, cross-record, and cross-context linkage interaction of the user, in this embodiment of this application, the target historical dialog record may include at least two-round historical dialog record, so that fusion search is performed on the at least two-round of historical dialog record.

S403: The second device sends a dialog fusion search instruction for the target historical dialog record to the first device in response to a dialog fusion search operation of the user.

As shown in FIG. 17, the dialog record select interface may further include a fusion search control. When the user needs to perform cross-topic and cross-record fusion search, the user selects the target historical dialog record, and then taps the fusion search control. When the second device detects that the user has a tap operation on the fusion search control, the second device may send a dialog fusion search instruction for the target historical dialog record to the first device in response to the dialog fusion search operation of the user.

In this embodiment of this application, the dialog fusion search instruction includes the target historical dialog record, and the dialog fusion search instruction instructs the first device to perform fusion search based on the target historical dialog record.

S404: The first device performs query recommendation prediction based on the target historical dialog record in response to the dialog fusion search instruction for the target historical dialog record, to obtain predicted query information, and sends the predicted query information to the second device.

After receiving the dialog fusion search instruction, the first device inputs the target historical dialog record into a recommendation model of a recommendation module in response to the dialog fusion search instruction, and performs query recommendation prediction on the target historical dialog record by using the recommendation model, to obtain the predicted query information.

It may be understood that the recommendation model is obtained by training a GPT base model based on scenario-based data for query recommendation. Therefore, after the target historical dialog record is input into the recommendation model, the recommendation model may perform query recommendation prediction based on the target historical dialog record, and output the predicted query information.

After obtaining the predicted query information, the first device may send the predicted query information to the second device.

S405: The second device displays the predicted query information on an information display interface.

After receiving the predicted query information sent by the first device, the second device may display the predicted query information to the user on the information display interface.

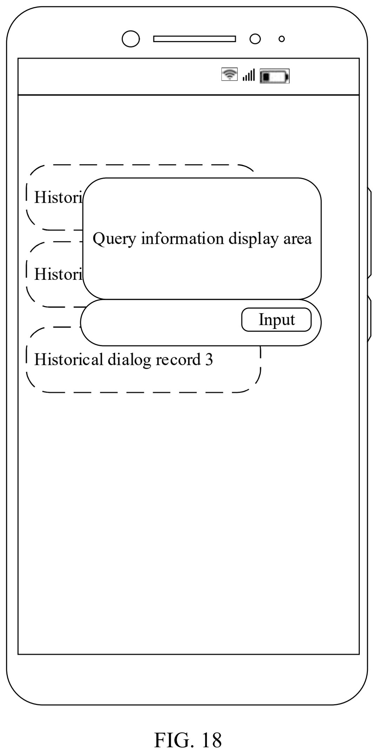

As shown in FIG. 18, the information display interface includes a query information display area and a query input field. The query information display area displays the predicted query information sent by the second device, and the query input field is used to receive query information input by the user.

S406: The second device obtains first query information in response to a query operation for the predicted query information on the information display interface or in response to the query information input in the query input field.

After the information display interface is displayed, the user may select, from the predicted query information displayed on the information display interface, predicted query information that the user is interested in, or input, in the query input field, query information that the user wants to query.

It may be understood that after the user selects the predicted query information that the user is interested in, the predicted query information selected by the user may be considered as the first query information. Correspondingly, after the user inputs the query information in the query input field, the query information input by the user may be considered as the first query information. S407: The second device sends the first query information and the target historical dialog record to the first device.

After obtaining the first query information, the second device may send the first query information and the target historical dialog record to the first device. It may be understood that the target historical dialog record in step S407 is the target historical dialog record selected by the user from the multi-round historical dialog record.

S408: The first device performs query rewriting on the first query information based on the target historical dialog record, to obtain second query information.

S409: The first device obtains reply data of the second query information based on the second query information.

S410: The first device sends a first query result to the second device based on the reply data of the second query information.

S411: The second device displays the first query result on a first result interface.

For a process of step S408 to step S411, refer to step S303 to step S306. Details are not described herein again.

In this embodiment of this application, a dialog record select function can be provided for the user, to support the user in randomly selecting a plurality of historical dialog records for fusion search, and implement cross-topic, cross-record, and cross-time dialog interaction of the user, thereby improving flexibility and diversity of dialog interaction.

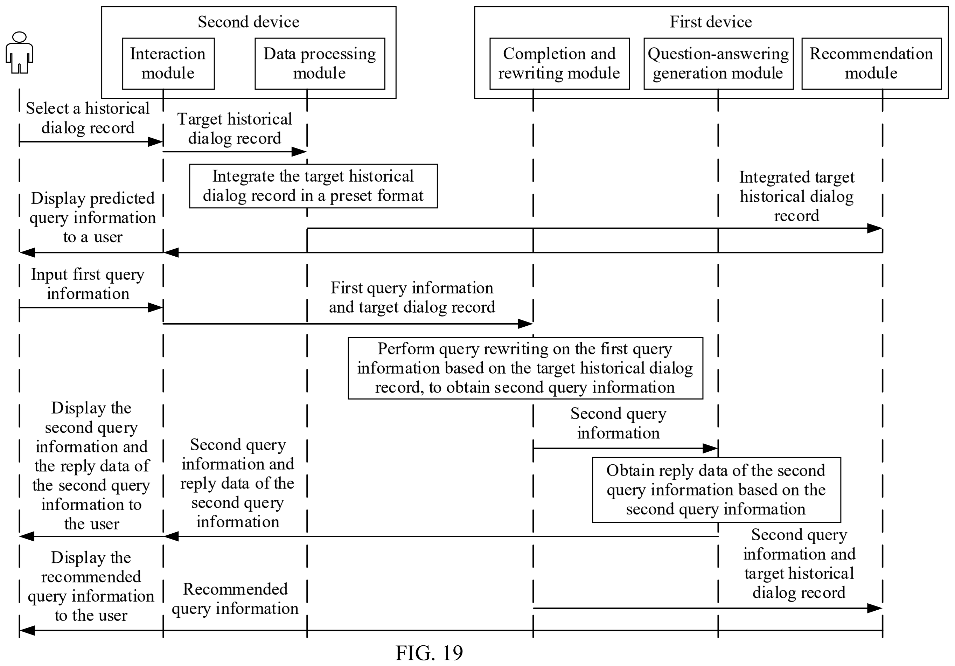

FIG. 19 is a diagram of another interaction time sequence of a dialog interaction method according to an embodiment of this application. As shown in FIG. 19, a second device receives, via an interaction module, a target historical dialog record selected by a user, and then transmits the target historical dialog record selected by the user to a data processing module. The data processing module integrates the target historical dialog record in a preset format, sends an integrated target historical dialog record to a recommendation module of a first device. A recommendation model of the recommendation module performs query recommendation prediction on the target historical dialog record to obtain predicted query information, and sends the predicted query information to the second device. The second device displays the predicted query information on an information display interface, and obtains first query information in response to a query operation of the user for the predicted query information on the information display interface or in response to query information input in a query input field, and sends the first query information and the target historical dialog record to a completion and rewriting module of the first device. A completion and rewriting model of the completion and rewriting module performs query rewriting on the first query information based on the target historical dialog record, to obtain second query information, and sends the second query information to a question-answering generation module. The question-answering generation module obtains reply data of the second query information based on the second query information, that is, invokes a search engine, queries information based on the second query information to obtain queried data, and then inputs the queried data into a question-answering generation model of the question-answering generation module. The question-answering generation model performs information organization, and outputs the reply data of the second query information. After obtaining the reply data of the second query information, the question-answering generation module returns the second query information and the reply data of the second query information to the second device. After obtaining the second query information, the completion and rewriting module may also send the second query information and the target historical dialog record to the recommendation module. The recommendation model of the recommendation module performs query recommendation prediction based on the second query information and the target historical dialog record, to obtain recommended query information, and returns the recommended query information to the second device. After receiving the second query information, the reply data of the second query information, and the recommended query information, the second device displays the second query information, the reply data of the second query information, and the recommended query information.

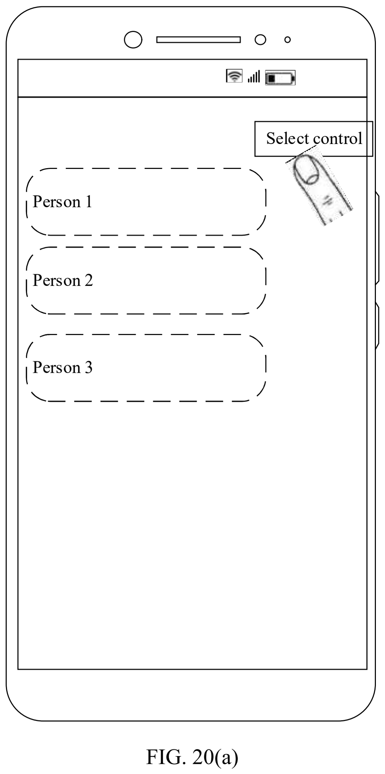

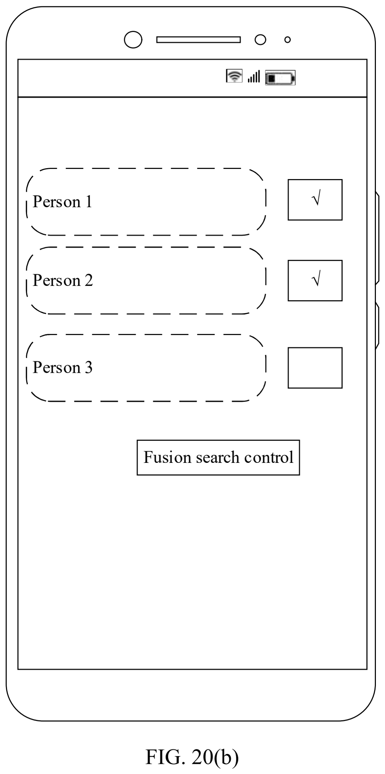

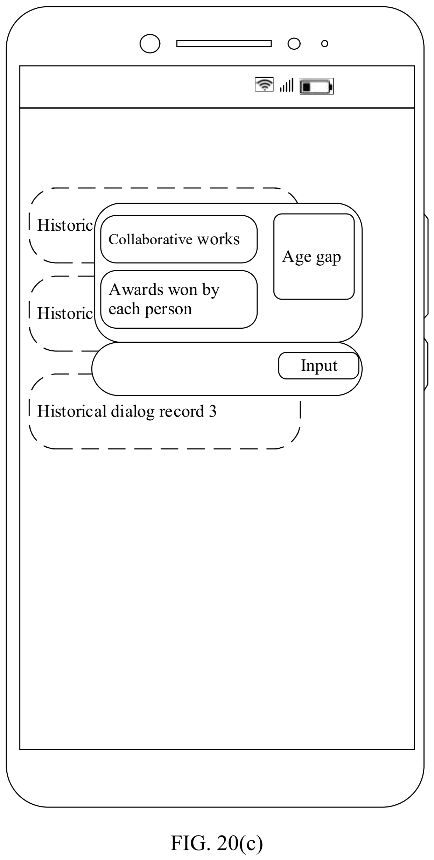

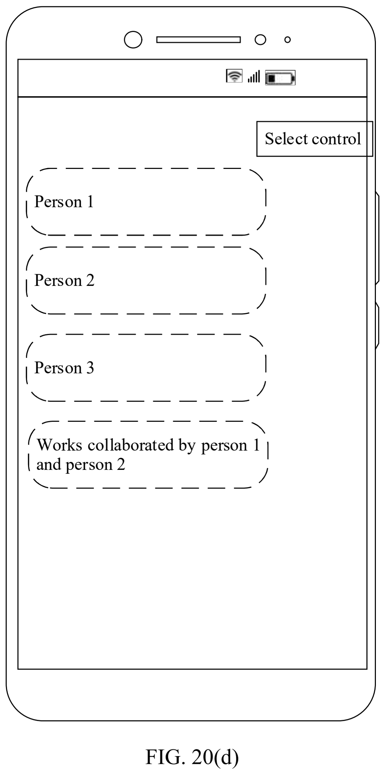

FIG. 20(a) to FIG. 20(d) are a diagram of interface interaction of a multi-round dialog. As shown in FIG. 20(a), a second device displays historical dialog records on a dialog record interface. The historical dialog records on the dialog record interface include "Person 1", "Person 2", "Person 3", and a select control. After a user taps the select control, the second device displays a dialog record select interface in response to the operation of the user for the select control, as shown in FIG. 20(b). Each historical dialog record on the dialog record select interface has a select box, and the dialog record select interface further includes a fusion search control. The user selects "Person 1" and "Person 2" on the dialog record select interface, and after completing selection, taps the fusion search control. The second device sends the historical dialog records selected by the user to a first device in response to the operation of the user. The first device performs query recommendation prediction based on the historical dialog records selected by the user, to obtain predicted query information, and sends the predicted query information to the second device. After receiving the predicted query information, the second device displays the predicted query information on an information display interface, as shown in FIG. 20(c). The predicted query information included on the information display interface includes "Collaborative works", "Awards won by each person", and "Age gap". The user selects the query information "Collaborative works" on the information display interface. In response to the operation of the user, the second device sends the selected query information "Collaborative works", the historical dialog record "Person 1", and the historical dialog record "Person 2" to the first device. The first device queries information on this information and returns a query result. As shown in FIG. 20(d), after the second device receives the query result returned by the first device, the dialog record interface of the second device adds this round of dialog record, that is, a dialog record of "Works cooperated by person 1 and person 2".

Embodiments of this application can support the user in flexibly selecting a plurality of historical dialog records, and predicting, based on the historical dialog records selected by the user, query information that the user may be interested in. The user may select query information based on an interest and search for the query information, to implement an across-topic, cross-record, and cross-time multi-round interaction experience. Compared with the conventional technology in which a user cannot independently control an interaction manner of multi-round dialog information that the user wants to combine, embodiments of this application can implement free context linkage and accurate generation of content that the user is interested in.

To help the user backtrack the historical dialog record, in embodiments of this application, the second device may further provide the user with import and export functions of the historical dialog record. Based on this, in embodiments of this application, after the first result interface is displayed, the following steps may further be included.
(1) Export the multi-round historical dialog record and the current-round dialog record in response to an export operation of the user.

The current-round dialog record includes the first query information and the first query result. It may be understood that when the user queries only the first query information, that is, after the user taps the query control search only for, the current-round dialog record includes the first query information and the second query result.

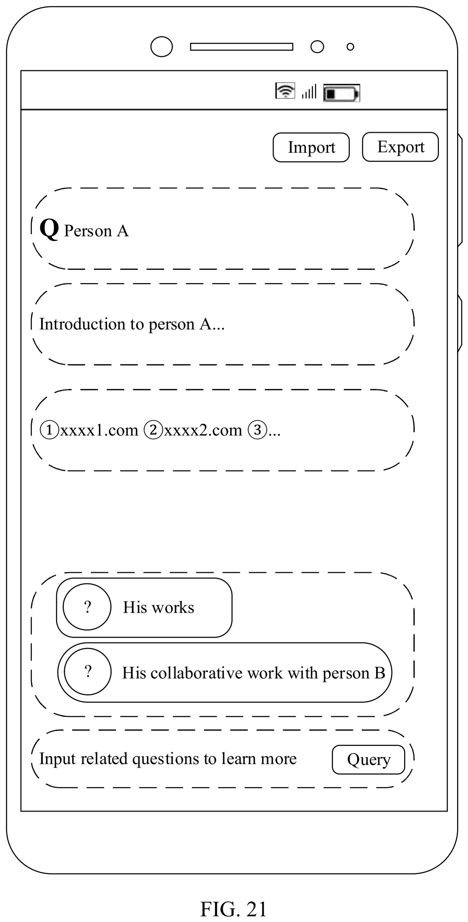

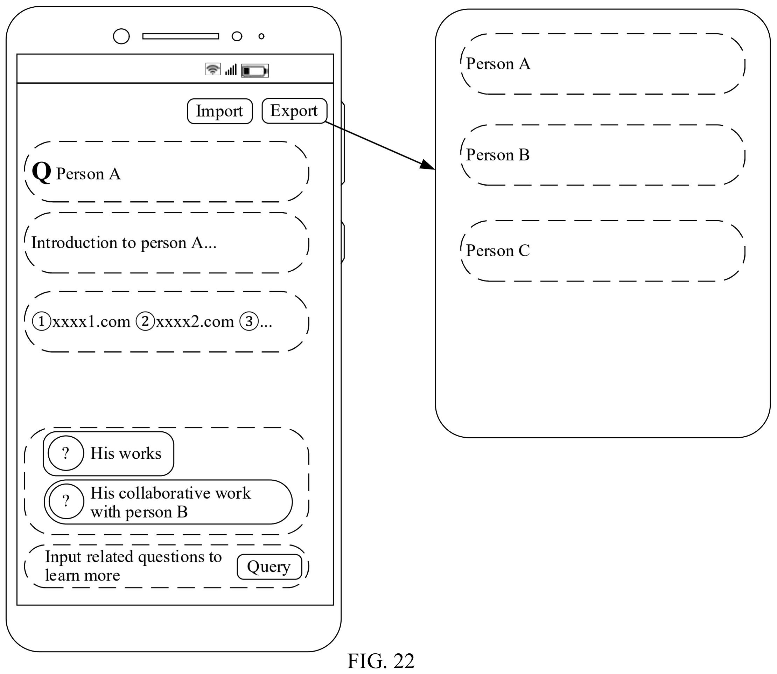

As shown in FIG. 21, in embodiments of this application, the result interface displayed by the second device may further include an import control and an export control. When the user needs to export a dialog record, the user may tap the export control. In response to the operation of the user, the second device may export the multi-round historical dialog record and the current-round dialog record, and store the multi-round historical dialog record and the current-round dialog record. FIG. 22 is a diagram of exporting the historical dialog record. The diagram of exporting the historical dialog record including person A, person B, and person C.

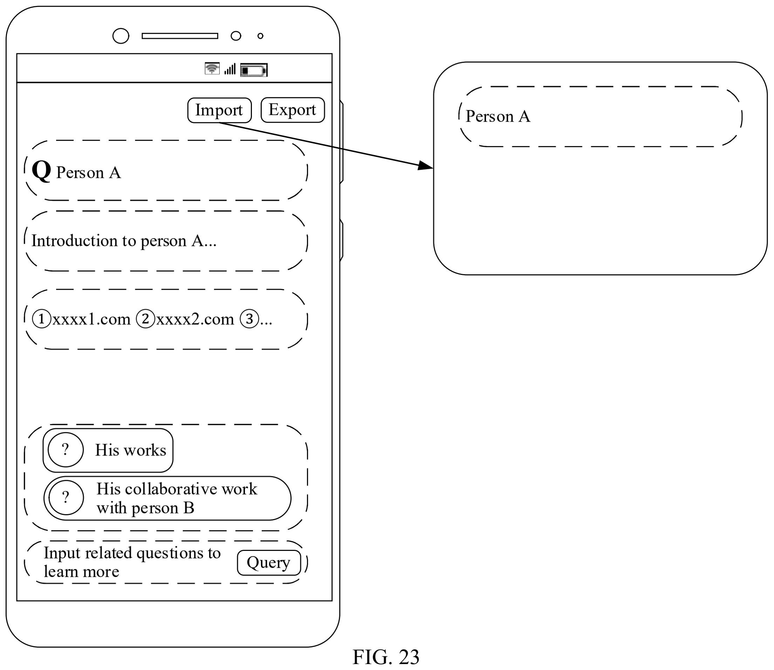

Correspondingly, in embodiments of this application, before the first query information and the target historical dialog record are sent to the first device, the following step may be further included: (2) Import the multi-round historical dialog record in response to an import operation of the user. When the user needs to import a dialog record, the user may also tap the import control. The second device imports the multi-round historical dialog record in response to the operation of the user. FIG. 23 is a diagram of importing a historical dialog record. After the historical dialog record of person A is imported, the result interface of the second device may display detailed information about the historical dialog record of person A.

In an optional implementation, after a plurality of historical dialog records are imported, the plurality of historical dialog records may be displayed on the result interface in a scrolling or folding manner, and may be specifically set based on a service requirement.

In embodiments of this application, a dialog record export function is provided, so that the user can conveniently review and archive the historical dialog record offline, and can conveniently backtrack the historical dialog record.

In embodiments of this application, after the user exports the dialog record, the user may further share the dialog record, that is, send the dialog record to a third device.

Correspondingly, in embodiments of this application, the multi-round historical dialog record may alternatively be shared by the third device to the second device. Therefore, in embodiments of this application, the multi-round historical dialog record may be a record stored by the second device in the current dialog interaction process, or may be a record shared by the third device to the second device and imported, or may be a record previously exported by the second device but imported in the current dialog interaction process.

In embodiments of this application, a dialog record import function is provided, to implement non-consecutive dialog interaction of the user. For example, when the user performs multi-round dialog interaction a time, the multi-round dialog record of the time may be exported and stored. In next dialog, when the user wants to continue dialog interaction based on the previous dialog interaction, the user may import the dialog record exported last time. It may be understood that after the dialog record is imported, the second device implements dialog interaction with the user based on the imported dialog record. For example, the second device determines, based on the imported dialog record, a target historical dialog record associated with query information input by the user.

In embodiments of this application, the dialog record import and export functions are provided, to greatly improve a non-consecutive interaction experience of the user. All dialog records can be exported for archiving, to facilitate backtracking and use.

In the dialog interaction method provided in embodiments of this application, a historical dialog record associated with query information is obtained, and query rewriting is performed based on the associated historical dialog record and the query information, to improve accuracy of the query information, improve accuracy of reply data of the query information, and improve interaction accuracy.

Embodiments of this application can support the user in flexibly selecting a single historical dialog record or a plurality of historical dialog records, and predicting, based on the historical dialog records selected by the user, query information that the user may be interested in. The user may select query information based on an interest and search for the query information, to implement an across-topic, cross-record, and cross-time multi-round interaction experience.

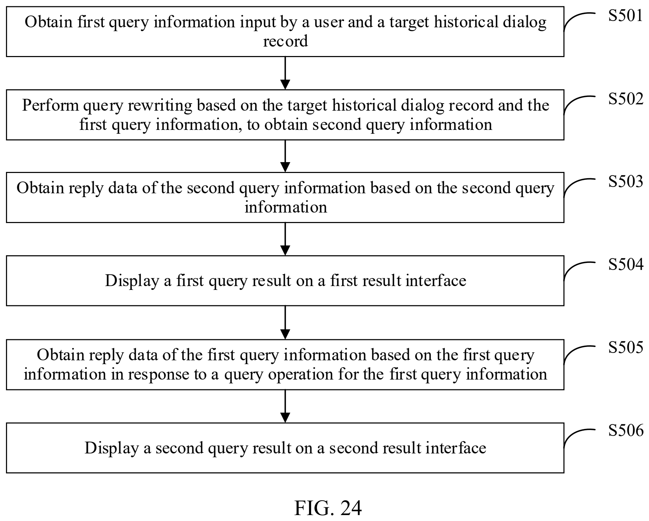

It may be understood that the dialog interaction method provided in embodiments of this application may also be independently applied to a terminal device. With reference to FIG. 24, the dialog interaction method applied to the terminal device provided in embodiments of this application may include step S501 to step S506, as shown in FIG. 24.

S501: Obtain first query information input by a user and a target historical dialog record.

For details about how the terminal device obtains the first query information input by the user, refer to step S301. Details are not described herein again.

When obtaining the target historical dialog record, the terminal device may calculate a similarity between each of a multi-round historical dialog record and the first query information, and obtain the target historical dialog record in the multi-round historical dialog record based on the similarity between each of the multi-round historical dialog record and the first query information. For a specific process, refer to step S302. Details are not described herein again.

S502: Perform query rewriting based on the target historical dialog record and the first query information, to obtain second query information.

S503: Obtain reply data of the second query information based on the second query information. For a process in step S502 and step S503, refer to a process in step S303 and step S304. Details are not described herein again.

S504: Display a first query result on a first result interface.

After obtaining the reply data of the second query information, the terminal device may display the first query result on the first result interface. For a specific process, refer to step S306.

It may be understood that the first query result displayed by the terminal device may also include both the reply data of the second query information and recommended query information. For a specific process, refer to the foregoing descriptions. Details are not described herein again. Correspondingly, the reply data of the second query information may not be a result expected by the user. To accurately obtain content that the user wants to learn of, in embodiments of this application, the first result interface displayed by the terminal device may also include a query control for the first query information. Based on this, after step S504, the following steps may further be included.

S505: Obtain reply data of the first query information based on the first query information in response to a query operation for the first query information.

When the user wants to query only the first query information, the user may tap the query control for the first query information on the first result interface. In response to the query operation of the user for the first query information, the terminal device invokes a search engine, queries information based on the first query information to obtain queried data of the first query information, and then inputs the queried data of the first query information into a question-answering generation model of a question-answering generation module. The question-answering generation model performs information organization, and outputs the reply data of the first query information.

S506: Display a second query result on a second result interface.

For a process in which the terminal device displays the second query result on the second result interface, refer to step S310. Details are not described herein again.

It may be understood that the second query result may also include the reply data of the first query information and recommended query information corresponding to the first query information.

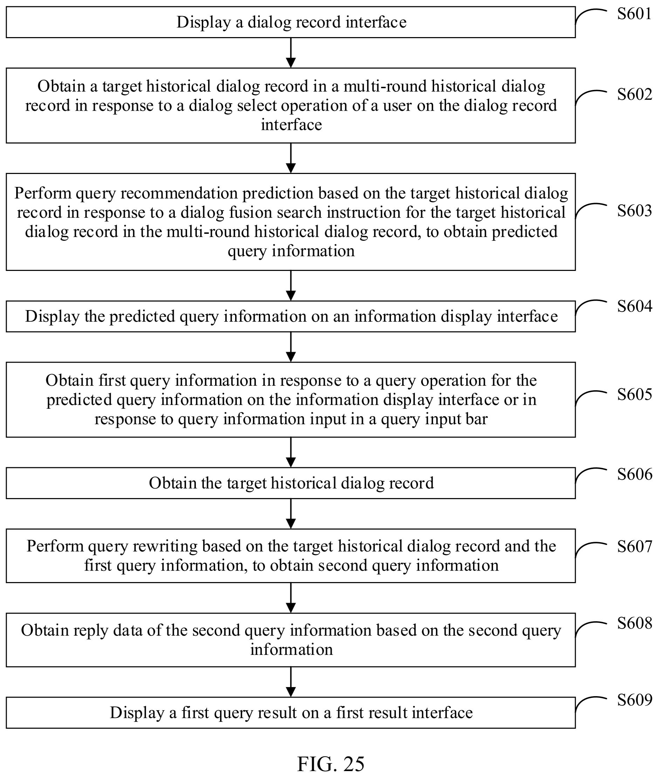

It may be understood that to provide more interaction forms and facilitate cross-context linkage of the user, the terminal device may also provide the user with a function of flexibly selecting the single historical dialog record or the plurality of historical dialog records for fusion retrieval, to implement cross-topic, cross-record, and cross-context proactive linkage interaction of the user. Based on this, with reference to FIG. 25, the dialog interaction method applied to the terminal device may further include S601 to S609.

S601: Display a dialog record interface.

In a process in which the terminal device performs dialog interaction with the user, the terminal device may store the historical dialog record of the user. When the user needs to view the historical dialog record, the user may perform a dialog record view operation on a current interface. The terminal device displays the dialog record interface to the user in response to the operation of the user. The dialog record interface includes multi-round historical dialog record of the user. For a specific process, refer to step S401. Details are not described herein again.

S602: Obtain a target historical dialog record in the multi-round historical dialog record in response to a dialog select operation of the user on the dialog record interface.

For a process of step S602, refer to step S402. Details are not described herein again.

S603: Perform query recommendation prediction based on the target historical dialog record in response to a dialog fusion search instruction for the target historical dialog record in the multi-round historical dialog record, to obtain predicted query information.

A dialog record select interface may further include a fusion search control. When the user needs to perform cross-topic and cross-record fusion search, after selecting the target historical dialog record, the user operates the fusion search control to deliver the dialog fusion search instruction to the terminal device. In response to the dialog fusion search instruction of the user, the terminal device inputs the target historical dialog record into a recommendation model of a recommendation module, and performs query recommendation prediction on the target historical dialog record by using the recommendation model, to obtain the predicted query information.

S604: Display the predicted query information on an information display interface.

S605: Obtain first query information in response to a query operation for the predicted query information on the information display interface or in response to the query information input in a query input field.

The information display interface includes a query information display area and the query input field. After the information display interface is displayed, the user may select, from the predicted query information displayed on the information display interface, predicted query information that the user is interested in, or input, in the query input field, the query information that the user wants to query.

It may be understood that after the user selects the predicted query information that the user is interested in, the predicted query information selected by the user may be considered as the first query information. Correspondingly, after the user inputs the query information in the query input field, the query information input by the user may be considered as the first query information. For details, refer to steps S405 and S406. Details are not described herein again.

S606: Obtain the target historical dialog record.

S607: Perform query rewriting based on the target historical dialog record and the first query information, to obtain second query information.

S608: Obtain reply data of the second query information based on the second query information. S609: Display a first query result on a first result interface.

For a process of step S606 to step S609, refer to step S501 to step S504. Details are not described herein again.

In embodiments of this application, the dialog record select function can be provided for the user, to support the user in randomly selecting the single historical dialog record or the plurality of historical dialog records for fusion search, and implement cross-topic, cross-record, and cross-time dialog interaction of the user, thereby improving flexibility and diversity of dialog interaction. Based on a same inventive idea, an embodiment of this application provides an electronic device. The electronic device may be the terminal device or the server in the foregoing embodiments. The electronic device may specifically include a communication interface, a memory, a processor, and one or more computer programs. The communication interface, the memory, and the processor may be connected through one or more communication buses. The one or more computer programs are stored in the memory and are configured to be executed by the processor. When the one or more computer programs are executed by the processor, functions or steps in the foregoing dialog interaction method are implemented.

An embodiment of this application further provides a computer-readable storage medium. The computer-readable storage medium stores computer program instructions. When the computer program instructions are executed by a processing circuit, functions or steps in the foregoing dialog interaction method are implemented.

In addition, an embodiment of this application may further provide a chip system. The chip system includes a processing circuit and a storage medium. The storage medium stores computer program instructions. When the computer program instructions are executed by the processing circuit, functions or steps in the foregoing dialog interaction method are implemented.

In addition, an embodiment of this application may further provide a computer program product including instructions. When the computer program product runs on a computer, the computer is enabled to perform functions or steps in the foregoing dialog interaction method.

In addition, an embodiment of this application may further provide a communication system. The communication system includes an auxiliary device and a terminal device. The terminal device and the auxiliary device may be configured to perform functions or steps in the foregoing dialog interaction method.

In addition, an embodiment of this application may further provide an operating system. When the operating system is run on a computer, the computer is enabled to perform functions or steps in the foregoing dialog interaction method.

According to the descriptions of the foregoing implementations, a person skilled in the art may clearly understand that, for the purpose of convenient and brief description, for specific working processes of the chip system, the electronic device, the computer-readable storage medium, the computer program product including the instructions, the communication system, and the operating system described above, refer to the corresponding processes in the foregoing method embodiments. Details are not described herein again.

It may be understood that methods or algorithm steps described with reference to embodiments of this application may be implemented by hardware, or may be implemented by a processor by executing software instructions. The software instructions may include a corresponding software module. The software module may be stored in a random access memory, a flash memory, an erasable programmable read-only memory, an electrically erasable programmable read-only memory, a register, a disk, a removable hard disk, a compact disc read-only memory, or a storage medium in any other form. For example, the storage medium is coupled to the processor, so that the processor can read information from the storage medium and write information to the storage medium. Certainly, the storage medium may be a component of the processor. The processor and the storage medium may be located in an application-specific integrated circuit (Application-Specific Integrated Circuit, ASIC). In addition, the ASIC may be located in an electronic device. Certainly, the processor and the storage medium may alternatively exist in the electronic device as discrete components.

In another optional manner, when software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A dialog interaction method, applied to a first device, wherein the method comprises:
obtaining first query information and a target historical dialog record, wherein the target historical dialog record is a historical dialog record that is in a multi-round historical dialog record and that is associated with the first query information;
performing query rewriting based on the target historical dialog record and the first query information, to obtain second query information; and
obtaining reply data of the second query information based on the second query information.

2. The method according to claim 1, wherein the target historical dialog record is a historical dialog record that is in the multi-round historical dialog record and whose similarity to the first query information meets a specified threshold.

3. The method according to claim 1, wherein after obtaining the reply data of the second query information based on the second query information, the method further comprises:
sending a first query result to a second device based on the reply data of the second query information; or
displaying the first query result on a first result interface, wherein the first query result comprises the reply data of the second query information.

4. The method according to claim 3, wherein after sending the first query result to the second device, the method further comprises:
receiving a query instruction that is from the second device and that is for the first query information, and obtaining reply data of the first query information based on the first query information; and
sending a second query result to the second device based on the reply data of the first query information; and
after displaying the first query result on the first result interface, the method further comprises:
obtaining the reply data of the first query information based on the first query information in response to a query operation for the first query information; and
displaying the second query result on a second result interface, wherein the second query result comprises the reply data of the first query information.

5. The method according to claim 1, wherein before obtaining the first query information and the target historical dialog record, the method further comprises:
performing query recommendation prediction based on the target historical dialog record in response to a dialog fusion search instruction for the target historical dialog record in the multi-round historical dialog record, to obtain predicted query information, wherein the target historical dialog record is a historical dialog record selected from the multi-round historical dialog record in response to a dialog select operation of a user; and
obtaining the first query information comprises:
obtaining the first query information obtained based on the predicted query information.

6. The method according to claim 5, wherein obtaining the first query information obtained based on the predicted query information comprises:
sending the predicted query information to a second device, and receiving the first query information obtained by the second device based on the predicted query information; or
displaying the predicted query information and a query input field on an information display interface; and
obtaining the first query information in response to a query operation for the predicted query information on the information display interface or in response to query information input in the query input field.

7. The method according to any one of claims 3 to 6, wherein after obtaining the reply data of the second query information based on the second query information, the method further comprises:
performing query recommendation prediction based on the second query information and the target historical dialog record, to obtain recommended query information, wherein the first query result comprises the recommended query information and the reply data of the second query information.

8. A dialog interaction method, applied to a second device, wherein the method comprises:
receiving first query information input by a user;
sending the first query information and a target historical dialog record to a first device, wherein the target historical dialog record is a historical dialog record that is in a multi-round historical dialog record and that is associated with the first query information;
receiving a first query result from the first device, wherein the first query result comprises reply data of second query information, and the second query information is query information obtained by performing query rewriting on the first query information by the first device based on the target historical dialog record; and
displaying the first query result on a first result interface.

9. The method according to claim 8, wherein the target historical dialog record is a historical dialog record that is in the multi-round historical dialog record and whose similarity to the first query information meets a specified threshold.

10. The method according to claim 8, wherein after displaying the first query result on the first result interface, the method further comprises:
sending a query instruction for the first query information to the first device in response to a query operation of the user for the first query information;
receiving a second query result from the first device, wherein the second query result comprises reply data of the first query information; and
displaying the second query result on a second result interface.

11. The method according to claim 8, wherein before receiving the first query information input by the user, the method further comprises:
displaying a dialog record interface, wherein the dialog record interface comprises the multi-round historical dialog record;
obtaining the target historical dialog record in the multi-round historical dialog record in response to a dialog select operation of the user on the dialog record interface;
sending a dialog fusion search instruction for the target historical dialog record to the first device in response to a dialog fusion search operation of the user;
receiving predicted query information obtained by the first device based on the target historical dialog record; and
displaying the predicted query information on an information display interface, wherein the information display interface further comprises a query input field, and the first query information is one piece of the predicted query information or query information input in the query input field.

12. The method according to any one of claims 8 to 10, wherein a query result returned by the first device further comprises recommended query information corresponding to query information, and the first query information is one piece of recommended query information comprised in a query result of a previous round of dialog.

13. The method according to any one of claims 8 to 12, wherein before sending the first query information and the target historical dialog record to the first device, the method further comprises:
importing the multi-round historical dialog record in response to an import operation of the user.

14. The method according to any one of claims 8 to 13, wherein after displaying the first result interface, the method further comprises:
exporting the multi-round historical dialog record and a current-round dialog record in response to an export operation of the user, wherein the current-round dialog record comprises the first query information and the first query result.

15. An electronic device, wherein the electronic device comprises:
a display, configured to display an interface;
a transceiver, configured to send and receive a radio signal;
a memory, configured to store computer program instructions; and
a processor, configured to execute the computer program instructions, to support the electronic device in implementing the method according to any one of claims 1 to 7 or the method according to any one of claims 8 to 14.

16. A computer-readable storage medium, wherein the computer-readable storage medium stores computer program instructions, and when the computer program instructions are executed by a processing circuit, the method according to any one of claims 1 to 7 or the method according to any one of claims 8 to 14 is implemented.

17. A dialog interaction system, comprising a first device and a second device, wherein the first device comprises a first module configured to implement the method according to any one of claims 1 to 7, the second device comprises a second module configured to implement the method according to any one of claims 8 to 14, and the first module and the second module are obtained by training a same base model.

18. A chip system, wherein the chip system comprises a processing circuit and a storage medium, the storage medium stores computer program instructions, and when the computer program instructions are executed by the processing circuit, the method according to any one of claims 1 to 7 or the method according to any one of claims 8 to 14 is implemented.

19. A computer program product comprising instructions, wherein when the computer program product runs on a computer, the computer is enabled to perform the method according to any one of claims 1 to 7 or perform the method according to any one of claims 8 to 14.
